# EUROPEAN PATENT APPLICATION

(11) **EP 4 481 851 A2**
(43) Date of publication of application: **25.12.2024**
(21) Application number: 24172933.4
(22) Date of filing: 29.04.2024
(51) Int. Cl.: H01M 4/38, H01M 4/505, H01M 4/525, H01M 4/58, H01M 4/62, H01M 10/0565, H01M 10/0566, H01M 10/42, H01M 10/052, H01M 10/0525

(54) **SECONDARY BATTERY**

(30) Priority: 23.06.2023 KR 20230081164
(71) Applicant: Samsung SDI Co., Ltd., Yongin-si, Gyeonggi-do 17084 (KR)
(72) Inventor: Son, Inhyuk, 17084 Gyeonggi-do (KR); Jo, Sungnim, 17084 Gyeonggi-do (KR); Shim, Kyueun, 17084 Gyeonggi-do (KR); Lim, Hyungsub, 17084 Gyeonggi-do (KR); Park, Taehyun, 17084 Gyeonggi-do (KR); Lee, Jieun, 17084 Gyeonggi-do (KR)
(74) Representative: Michalski Hüttermann & Partner Patentanwälte mbB

(57) **Abstract**

A secondary battery including a cathode layer, an anode layer, and a flexible electrolyte layer between the cathode layer and the anode layer. The cathode layer includes a cathode current collector and a cathode active material layer on at least one surface of the cathode current collector. The anode layer includes an anode current collector and a first anode active material layer on a surface of the anode layer. The initial charge capacity of the first anode active material layer is less than 50 % of the initial charge capacity of the cathode active material layer.

## Description

### CROSS-REFERENCE TO RELATED APPLICATION

The present application claims priority to and the benefit of Korean Patent Application No. 10-2023-0081164, filed on June 23, 2023, in the Korean Intellectual Property Office, the entire content of which is incorporated herein by reference.

### BACKGROUND

### 1. Field

Embodiments of the present disclosure described herein are related to a secondary battery.

### 2. Description of the Related Art

Recently, in line with industrial needs, the development of batteries having high energy density and safety has been actively conducted. For example, lithium batteries are utilized in one or more suitable applications/devices, including information devices, communication devices, vehicles, and/or the like. Vehicles also have additional safety concerns.

Further, lithium batteries employing liquid electrolytes can increase the risk of fire and/or explosion when a short circuit occurs. Secondary batteries that employ solid electrolytes instead of liquid electrolytes have been proposed because solid electrolytes are less likely to ignite than compared to liquid electrolytes.

By employing a solid electrolyte in a secondary battery, the risk of fire or explosion can be reduced. Thus, secondary batteries employing solid electrolytes can provide enhanced safety.

### SUMMARY

Aspects according to one or more embodiments are directed toward a secondary battery having enhanced cycle characteristics by disposing a flexible electrolyte layer between a cathode layer and an anode layer.

Additional aspects will be set forth in part in the description which follows and, in part, will be apparent from the description, or may be learned by practice of the presented embodiments of the present disclosure.

According to one or more embodiments, a secondary battery includes:
a cathode layer, an anode layer, and a flexible electrolyte layer between the cathode layer and the anode layer,
wherein the cathode layer includes a cathode current collector and a cathode active material layer on one or both (e.g., opposite) surfaces of the cathode current collector, and
the anode layer includes an anode current collector and a first anode active material layer on one surface of the anode current collector,
wherein an initial charge capacity of the first anode active material layer is less than 50% of an initial charge capacity of the cathode active material layer.

### BRIEF DESCRIPTION OF THE DRAWINGS

The above and other aspects, features, and advantages of certain embodiments of the present disclosure will be more apparent from the following description taken in conjunction with the accompanying drawings, in which:
FIG. 1 is a cross-sectional view of a secondary battery according to embodiments;
FIG. 2 is a cross-sectional view of a secondary battery according to embodiments;
FIG. 3 is a cross-sectional view of a secondary battery according to embodiments;
FIG. 4 is a cross-sectional view of a secondary battery according to embodiments;
FIG. 5 is a schematic view of a secondary battery according to embodiments;
FIG. 6 is a schematic view of a secondary battery according to embodiments; and
FIG. 7 is a schematic view of a secondary battery according to embodiments.

### DETAILED DESCRIPTION

Reference will now be made in more detail to embodiments, examples of which are illustrated in the accompanying drawings, wherein like reference numerals refer to like elements throughout, and duplicative descriptions thereof may not be provided. In this regard, the present embodiments may have different forms and should not be construed as being limited to the descriptions set forth herein. Accordingly, the embodiments are merely described, by referring to the drawings, to explain aspects of the present description. As utilized herein, the term "and/or" includes any and all combinations of one or more of the associated listed items. Expressions such as "at least one of," when preceding a list of elements, modify the entire list of elements and do not modify the individual elements of the list.

Unless otherwise defined, all terms (including technical and scientific terms) utilized herein have the same meaning as commonly understood by those of ordinary skill in the art to which the present disclosure pertains. Also, terms, such as those defined in commonly utilized dictionaries, should be interpreted as having a meaning that is consistent with their meaning in the context of the related art and the present disclosure, and should not be interpreted in an idealized or overly formal sense.

Embodiments are described in the present disclosure with reference to schematic cross-sectional views of idealized embodiments. As such, variations from the shapes of illustrations as a result of, for example, manufacturing techniques and/or tolerances, are to be expected. Thus, embodiments of the present disclosure should not be construed as limited to particular shapes of regions illustrated herein but are to include deviations in shapes that result from, for example, manufacturing. For example, areas shown or described as flat may typically have rough and/or non-linear features. Moreover, angles shown as sharp may be rounded. Accordingly, the regions illustrated in the drawings are schematic in nature and their shapes are not intended to illustrate the actual shape of a region and are not intended to limit the scope of the claims.

The present disclosure can be embodied in many different forms, and should not be construed as limited to embodiments described in the present disclosure. The embodiments are provided so that this disclosure will be thorough and complete, and will fully convey the scope of the present disclosure to those of ordinary skill in the art. Like reference numerals denote like elements.

It will be understood that, when an element is referred to as being "on" another element, it may be directly on the other element, or another element may be interposed therebetween. In contrast, when an element is referred to as being "directly on" another element, another element is not interposed therebetween.

Although the terms "first," "second," "third," and/or the like may be utilized herein to describe one or more suitable elements, components, regions, layers, and/or sections, these elements, components, regions, layers, and/or sections should not be limited by these terms. These terms are only utilized to distinguish one element, component, region, layer or section from another element, component, region, layer or section. Thus, a first element, component, region, layer or section described herein may be referred to as a second element, component, region, layer or section without departing from the teachings of the present disclosure.

The terms utilized in the present disclosure are for describing only specific embodiments and are not intended to limit the present inventive step. The singular form as utilized herein is intended to include the plural form including "at least one" unless the content (e.g., amount) clearly dictates otherwise. "At least one" should not be construed as limiting to the singular form. As utilized herein, the term "and/or" includes any and all combinations of one or more of the list items. The terms "comprises" and/or "comprising," when utilized in the detailed description, specify the presence of stated features, regions, integers, steps, operations, elements, and/or components, but do not preclude the presence or addition of one or more other features, regions, integers, steps, operations, elements, components, and/or groups thereof.

Spatially relative terms such as "beneath," "under," "below," "on," "over," "above," and/or the like may be utilized herein to easily describe the relationship between one component or feature and another component or feature. It will be understood that spatially relative terms are intended to encompass different directions of a device in use or operation in addition to the directions shown in the drawings. For example, if the device in the drawings is turned over, a component described as "beneath" or "under" will be oriented "over" the other component or feature. Thus, the example term "below" may encompass both (e.g., simultaneously) an upward direction and a downward direction. The device may be placed in different directions (rotated 90° or rotated in different directions), and spatially relative terms as used herein may be interpreted accordingly.

The "group" refers to a group of the periodic table of elements according to Group 1-18 Family Classification System of the International Federation of Pure and Applied Chemistry ("IUPAC").

The term "particle diameter" of particles as utilized herein indicates an average diameter when the particles are spherical and indicates an average long axis length when the particles are non-spherical. The particle diameter of particles may be measured by utilizing a particle size analyzer (PSA). The "particle diameter" may be, for example, an average particle diameter. The "average particle diameter" may be, for example, D50, which is a median particle diameter.

D50 is a particle size of particles corresponding to 50% cumulative volume calculated from particles having a small particle size in the particle size distribution measured by a laser diffraction method.

D90 is a particle size of particles corresponding to 90% cumulative volume calculated from particles having a small particle size in the particle size distribution measured by a laser diffraction method.

D10 is a particle size of particles corresponding to 10% cumulative volume calculated from particles having a small particle size in the particle size distribution measured by a laser diffraction method.

In the present disclosure, "viscosity" may be measured by utilizing viscometer, for example, rotational viscometer such as LV DV-II + Pro Viscometer (cone-plate type or kind) available from Brookfield. For example, viscosity may be measured at 1 atm and 25 °C after ionic liquid is dissolved in dimethyl formamide (DMF) at a concentration of 35 wt%. For example, in viscosity measurement, the spindle is S40, rpm 15, and the sample loading amount is 1 mL.

The term "weight average molecular weight" as utilized herein may refer to a converted value for standard polystyrene as measured by gel permeation chromatography (GPC). The molecular weight may be, for example, a weight average molecular weight. For example, for weight average molecular weight measurement utilizing GPC, the Agilent 1200 series may be utilized, an Agilent PL mixed B column may be utilized, and THF may be utilized as a solvent.

In the present disclosure, "metal" includes both (e.g., simultaneously) metals and metalloids such as silicon and germanium, in elemental or ionic states.

The term "alloy" as utilized herein refers to a mixture of two or more metals.

The term "electrode active material" as utilized herein refers to an electrode material that can undergo lithiation and delithiation.

The term "cathode active material" as utilized herein refers to a cathode material that can undergo lithiation and delithiation.

The term "anode active material" as utilized herein refers to an anode material that can undergo lithiation and delithiation.

The terms "lithiation" and "lithiate" as utilized herein refer to a process of adding lithium to an electrode active material.

The terms "delithiation" and "delithiate" as utilized herein refer to a process of removing lithium from an electrode active material.

The terms "charging" and "charge" as utilized herein refer to a process of providing electrochemical energy to a battery.

The terms "discharging" and "discharge" as utilized herein refer to a process of removing electrochemical energy from a battery.

The term "cathode" and "positive electrode" as utilized herein refers to an electrode where electrochemical reduction and lithiation occur during a discharge process.

The term "anode" and "negative electrode" as utilized herein refers to an electrode where electrochemical oxidation and delithiation occur during a discharge process.

As utilized herein, the term "and/or" includes any and all combinations of one or more of the associated listed items. As used herein, expressions such as "at least one of", "one of", and "selected from", when preceding a list of elements, modify the entire list of elements and do not modify the individual elements of the list. For example, "at least one of a, b or c", "at least one selected from a, b and c", etc., may indicate only a, only b, only c, both (e.g., simultaneously) a and b, both (e.g., simultaneously) a and c, both (e.g., simultaneously) b and c, all of a, b, and c, or variations thereof.

As utilized herein, the term "substantially" and similar terms are utilized as terms of approximation and not as terms of degree, and are intended to account for the inherent deviations in measured or calculated values that would be recognized by those of ordinary skill in the art. Also, the term "about" and similar terms, when utilized herein in connection with a numerical value or a numerical range, are inclusive of the stated value and a value within an acceptable range of deviation for the particular value as determined by one of ordinary skill in the art, considering the measurement in question and the error associated with measurement of the particular quantity (e.g., the limitations of the measurement system). For example, "about" may refer to within one or more standard deviations, or within ± 30%, 20%, 10%, 5% of the stated value.

Also, any numerical range recited herein is intended to include all subranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

While specific embodiments have been described, alternatives, modifications, variations, improvements, and substantial equivalents that are currently unexpected or unforeseeable may be made by the applicant or those of ordinary skill in the art. Accordingly, it is intended that the appended claims, which may be filed and amended, include all such alternatives, modifications, variations, improvements and substantial equivalents.

Hereinafter, a secondary battery according to embodiments will be described in more detail.

### Secondary battery

A secondary battery according to one or more embodiments includes: a cathode layer; a anode layer; and a flexible electrolyte layer between the cathode layer and the anode layer, the cathode layer includes a cathode current collector and a cathode active material layer on one or both (e.g., opposite) surfaces of the cathode current collector (e.g., at least one surface of the cathode current collector), the anode layer includes an anode current collector and a first anode active material layer on one surface of the anode current collector, and an initial charge capacity of the first anode active material layer is less than 50% of an initial charge discharge of the cathode active material layer.

By including the flexible electrolyte layer between the cathode layer and the anode layer in the secondary battery, the interfacial resistance between the cathode layer and/or the anode layer and the electrolyte layer may be reduced, and during charging and discharging of the secondary battery, the flexible electrolyte layer may more easily accommodate change(s) in the volume(s) of the cathode layer and/or the anode layer. The flexible electrolyte layer may have an enhanced adhesion to the cathode layer and/or the anode layer compared to a non-flexible electrolyte layer, and thus, separation of the cathode layer and/or the anode layer from the electrolyte layer may be prevented or reduced. The non-flexible electrolyte layer may be, for example, an inorganic solid electrolyte layer. The non-uniformity of ionic conductivity in the flexible electrolyte layer during charging and discharging processes of the secondary battery may be suppressed or reduced because the flexible electrolyte layer has a low possibility of cracks and/or the like. In contrast, the non-uniformity of ionic conductivity in a solid electrolyte layer may be increased because the non-flexible electrolyte layer undergoes local cracks and/or the like during charging and discharging of the secondary battery. The formation of defects such as pinholes in the flexible electrolyte layer may be suppressed or reduced, and thus, the growth of lithium dendrites due to such defects and/or the like during charging and discharging processes of the secondary battery and the consequent short-circuit of the secondary battery may be more effectively suppressed or reduced. The flexible electrolyte layer may provide enhanced moisture stability compared to the non-flexible electrolyte layer, thereby suppressing side reactions caused by moisture, such as gas generation, in the secondary battery. A decrease in the ionic conductivity of the electrolyte layer in the secondary battery may be more effectively suppressed or reduced. Therefore, the cycle characteristics of the secondary battery may be further enhanced. For example, the high-rate characteristics, lifespan characteristics, and/or the like of the secondary battery may be enhanced.

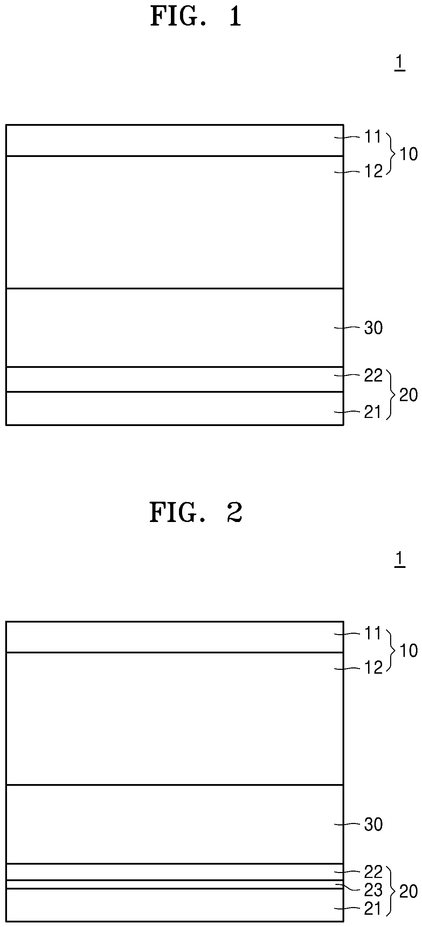

Referring to FIGS. 1 to 4, a secondary battery 1 includes: a cathode layer 10; an anode layer 20; and a flexible electrolyte layer 30 between the cathode layer 10 and the anode layer 20. The cathode layer 10 includes a cathode current collector 11 and a cathode active material layer 12 on one or both (e.g., opposite) surfaces of the cathode current collector 11 (e.g., at least one surface of the cathode current collector 11). The anode layer 20 includes an anode current collector 21 and a first anode active material layer 22 on one surface of the anode current collector 21. The initial charge capacity of the first anode active material layer 22 is less than 50% of the initial charge capacity of the cathode active material layer 12.

### Electrolyte layer

### Electrolyte layer: organic electrolyte

Referring to FIGS. 1 to 4, the secondary battery 1 includes the electrolyte layer 30 between the cathode layer 10 and the anode layer 20. The electrolyte layer 30 has flexibility. The electrolyte layer 30 may include, for example, an organic electrolyte. The electrolyte layer 30 may be, for example, an organic electrolyte layer. The electrolyte layer 30 may not include (e.g., may exclude), for example, an inorganic electrolyte. For example, the electrolyte layer 30 may not include (e.g., may exclude) the inorganic electrolyte layer 30. The electrolyte layer 30 may not include (e.g., may exclude), for example, a sulfide-based solid electrolyte, an oxide-based solid electrolyte, or a combination thereof. The flexibility of the electrolyte layer 30 may be further enhanced because the electrolyte layer 30 does not include an inorganic solid electrolyte.

In present disclosure, "not include a or any 'component'" "exclude a or any 'component'", "'component'-free", and/or the like refers to that the "component" not being added, selected or utilized as a component in the composition, but the "component" of less than a suitable amount may still be included due to other impurities and/or external factors.

The electrolyte layer 30 may include, for example, a polymer electrolyte, a liquid electrolyte, or a combination thereof. For example, the viscosity of the polymer electrolyte may be higher than that of the liquid electrolyte. For example, the viscosity of the liquid electrolyte may be 10 cps or greater at 25 °C and 1 atm. The liquid electrolyte may be, for example, a high-viscosity liquid electrolyte having a viscosity of 10 cps or greater at 25 °C and 1 atm.

A polyelectrolyte is an electrolyte including a polymer. The polyelectrolyte may include, for example, a polymer solid electrolyte, a polymer gel electrolyte, or a combination thereof.

For example, the polyelectrolyte may be classified into a polymer solid electrolyte or a polymer gel electrolyte depending on whether liquid is included. In other embodiments, the polyelectrolyte may be classified into a polymer solid electrolyte or a polymer gel electrolyte depending on the state thereof, for example, at 25 and 1 atm. The polymer solid electrolyte may include, for example, a mixture of a lithium salt and a polymer, or a polymer having an ion-conducting functional group. The polymer solid electrolyte may be, for example, a polyelectrolyte in a solid state at 25 °C and 1 atm. The polymer solid electrolyte may not include (e.g., may exclude) liquid.

For example, the polymer gel electrolyte may include a liquid electrolyte and a polymer, or may include an organic solvent and a polymer having an ion-conducting functional group. The liquid electrolyte may be, for example, an ionic liquid, a mixture of a lithium salt and an ionic liquid, a mixture of a lithium salt and an organic solvent, a mixture of an ionic liquid and an organic solvent, or a mixture of a lithium salt, an ionic liquid, and an organic solvent. The polymer gel electrolyte may be, for example, a polyelectrolyte is in a gel state at 25 °C and 1 atm. For example, the polymer gel electrolyte may not include (e.g., may exclude) liquid, while the polymer itself may be in a gel state.

The lithium salt utilized in the polyelectrolyte and/or the liquid electrolyte is not limited, and any lithium salt that may be utilized as a lithium salt of an electrolyte in the art is possible. The lithium salt may be, for example, LiPF₆, LiBF₄, LiSbF₆, LiAsF₆, LiClO₄, LiCF₃SO₃, Li(CF₃SO₂)₂N, LiC₄F₉SO₃, LiAlO₂, LiAlCl₄, LiN(CₓF₂ₓ₊₁SO₂)(C_{y}F_{2y+1}SO₂) where x and y are each 1 to 20, LiCl, Lil, or a mixture thereof.

The polyelectrolyte may include, for example, a polymer including repeating units having a thermopolymerizable functional group, a thermally cured product of the polymer, an oligomer including repeating units having a thermopolymerizable functional group, a thermally cured product of the oligomer, a monomer having a thermopolymerizable functional group, a thermally cured product of the monomer, an oligomeric ionic liquid, a polymeric ionic liquid, or a combination thereof.

The polymer including repeating units having a thermopolymerizable functional group, the thermally cured product of the polymer, and the oligomer including repeating units having a thermopolymerizable functional group may further include repeating units having no thermopolymerizable functional group. The repeating units having no thermopolymerizable functional group are not limited, and any repeating unit derived from an unsaturated group-containing monomer commonly utilized in the preparation of copolymers in the art is possible. The repeating units having no thermopolymerizable group may be, for example, an acrylic monomer such as methyl acrylate or ethyl acrylate.

The thermopolymerizable functional group may include, for example, a cyano group, a hydroxyl group, an amino group, an amide group, an imide group, a carboxyl group, an acid anhydride group, or a combination thereof.

The polymer including repeating units having a thermopolymerizable functional group and/or the oligomer including repeating units having a thermopolymerizable functional group may include, for example, repeating units derived from a cyano group-containing monomer, repeating units derived from a hydroxyl group-containing monomer, repeating units derived from an acid anhydride group-containing monomer, repeating units derived from an amino group-containing monomer, repeating units derived from an amide group-containing monomer, repeating units derived from an imide group-containing monomer, repeating units derived from a carboxyl group-containing monomer, or a combination thereof. The monomer having a thermopolymerizable functional group may include, for example, a cyano group-containing monomer, a hydroxyl group-containing monomer, an amino group-containing monomer, an amide group-containing monomer, an imide group-containing monomer, a carboxyl group-containing monomer, an acid anhydride group-containing monomer, or a combination thereof.

Non-limiting examples of the cyano group-containing monomer may include: unsaturated carboxylic acid nitrile-based monomers such as acrylonitrile, methacrylonitrile, and vinylidene cyanide; cyanoalkyl ester-based monomers of unsaturated carboxylic acid, such as 2-cyanoethyl(meth)acrylate, 2-cyanopropyl(meth)acrylate, and 3-cyanopropyl(meth)acrylate; and CH=CH-C(=O)-(OCH₂CH₂)ₙ-CN (n= 1 to 20).

Non-limiting examples of the hydroxyl group-containing monomer may include hydroxyalkyl ester monomers of methacrylic acid, such as 2-hydroxyethyl (meth)acrylate, 2-hydroxypropyl (meth)acrylate, 3-hydroxypropyl (meth)acrylate, 2-hydroxybutyl (meth)acrylate, 3-hydroxybutyl (meth)acrylate, and 4-hydroxybutyl (meth)acrylate.

Non-limiting examples of the amino group-containing monomer may include aminoalkylester monomers of unsaturated carboxylic acid, such as aminomethyl (meth)acrylate, methylaminomethyl (meth)acrylate, dimethylaminomethyl (meth)acrylate, 2-aminoethyl (meth)acrylate, 2-methylaminoethyl (meth)acrylate, 2-ethylaminoethyl (meth)acrylate, 2-dimethylaminoethyl (meth)acrylate, 2-diethylaminoethyl (meth)acrylate, 2-n-propylaminoethyl (meth)acrylate, 2-n-butylaminoethyl (meth)acrylate, 2-aminopropyl (meth)acrylate, 2-methylaminopropyl (meth)acrylate, 2-dimethylaminopropyl (meth)acrylate, 3-aminopropyl (meth)acrylate, 3-methylaminopropyl (meth)acrylate, and 3-dimethylaminopropyl (meth)acrylate.

Non-limiting examples of the amide group-containing monomer may include: unsaturated carboxylic acid amide monomers, such as (meth)acrylamide, α-chloroacrylamide, N,N'-methylenebis(meth)acrylamide, N,N'-ethylenebis(meth)acrylamide, N-hydroxymethyl (meth)acrylamide, N-2-hydroxyethyl (meth)acrylamide, N-2-hydroxypropyl (meth)acrylamide, N-3-hydroxypropyl (meth)acrylamide, crotonic acid amide, maleic acid diamide, fumaric acid diamide, and diacetone acrylamide; and unsaturated carboxylic acid amide monomers, such as N-dimethylaminomethyl (meth)acrylamide, N-2-aminoethyl (meth)acrylamide, N-2-methylaminoethyl (meth)acrylamide, N-2-ethylaminoethyl (meth)acrylamide, N-2-dimethylaminoethyl (meth)acrylamide, N-2-diethylaminoethyl (meth)acrylamide, N-3-aminopropyl (meth)acrylamide, N-3-methylaminopropyl (meth)acrylamide, and N-3-dimethylaminopropyl (meth)acrylamide.

Non-limiting examples of the imide group-containing monomer may include cyclohexylmaleimide, isopropylmaleimide, N-cyclohexylmaleimide, and itaconimide.

Non-limiting examples of the carboxyl group-containing monomer may include: unsaturated monocarboxylic acid monomers, such as (meth)acrylic acid and crotonic acid; unsaturated polycarboxylic acid monomers, such as maleic acid, fumaric acid, itaconic acid, citraconic acid, and mesaconic acid; and free carboxyl group-containing alkylester monomers or free carboxyl group-containing amide monomers of the previously described unsaturated polycarboxylic acids.

Non-limiting examples of the carboxylic acid anhydride group-containing monomer may include acid anhydrides of the previously described unsaturated polycarboxylic acid.

The thermally cured product of the polymer including repeating units having a thermopolymerizable functional group, the thermally cured product of the oligomer including repeating units having a thermopolymerizable functional group, and the thermally cured product of the monomer having a thermopolymerizable functional group may each be obtained by heat-treating the polymer including repeating units having a thermopolymerizable functional group, the oligomer including repeating units having a thermopolymerizable functional group, and the monomer having a thermopolymerizable functional group, for example, at about 50 °C to about 200 °C, about 50 °C to about 150 °C, about 50 °C to about 100 °C, or about 50 °C to about 70 °C. The heat treatment time may be, for example, in a range of about 1 minute to about 120 minutes, about 5 minutes to about 100 minutes, about 10 minutes to about 80 minutes, or about 30 minutes to about 80 minutes.

The oligomeric ionic liquid and the polymeric ionic liquid may be, for example, a polymerized product of ionic liquid monomers.

The ionic liquid monomer may be selected from unsaturated monomers including: a) at least one cation selected from among an ammonium-based cation, a pyrrolidinium-based cation, a pyridinium-based cation, a pyrimidinium-based cation, an imidazolium-based cation, a piperidinium-based cation, a pyrazolium-based cation, an oxazolium-based cation, a pyridazinium-based cation, a phosphonium-based cation, a sulfonium-based cation, a triazolium-based cation, and/or one or more mixtures (and/or combinations) thereof; and b) at least one anion selected from among BF4-, PF6-, AsF6-, SbF6-, AlCl4-, HSO4-, ClO4-, CH3SO3-, CF3CO2-, Cl-, Br-, I-, BF4-, SO4-, CF3SO3-, (FSO2)2N-, (C2F5SO2)2N-, (C2F5SO2)(CF3SO2)N-, and/or (CF3SO2)2N-. By polymerizing these ionic liquid monomers, an oligomeric ionic liquid or a polymeric ionic liquid may be obtained.

The liquid electrolyte is an electrolyte that is in a liquid state, for example, at 25 °C and 1 atm. The viscosity of the liquid electrolyte may be, for example, 10 cps or greater, 15 cps or greater, 20 cps or greater, 25 cps or greater, or 30 cps or greater at 25 °C and 1 atm. The viscosity of the liquid electrolyte may be, for example, in a range of about 10 cps to about 1,000 cps, about 15 cps to about 500 cps, about 20 cps to about 300 cps, about 25 cps to about 200 cps, or about 30 cps to about 100 cps, at 25 °C and 1 atm. The viscosity of the liquid electrolyte may be measured by utilizing a LV DV-II + Pro Viscometer (cone-plate type or kind) available from Brookfield. If (e.g., when) the liquid electrolyte has high viscosity within the previously describe range, then change(s) in the volume(s) of the cathode layer 10 and/or the anode layer 10 during charging and discharging may be more effectively accommodated, the interfacial resistance between the cathode layer 10 and/or the anode layer 10 and the electrolyte layer 30 may be more effectively reduced, and an enhanced adhesion between the cathode layer 10 and/or the anode layer 10 and the electrolyte layer 30 may be provided. Consequently, the cycle characteristics of the secondary battery 1 may be enhanced. If (e.g., when) the viscosity of the liquid electrolyte is too low, then the previously described effects may be insignificant.

The liquid electrolyte may include, for example, an ionic liquid.

For example, the ionic liquid may be represented by Formula 1 or 2: 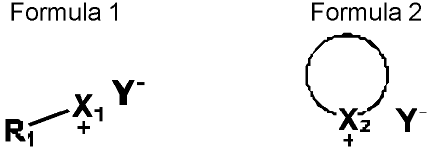 wherein, in Formula 1, X₁ may be -N(R₂)(R₃)(R₄) or -P(R₂)(R₃)(R₄), and
R₁, R₂, R₃, and R₄ may each independently be an unsubstituted or halogen-substituted C1-C30 alkyl group, an unsubstituted or halogen-substituted C1-C30 alkoxy group, an unsubstituted or halogen-substituted C6-C30 aryl group, an unsubstituted or halogen-substituted C6-C30 aryloxy group, an unsubstituted or halogen-substituted C3-C30 heteroaryl group, an unsubstituted or halogen-substituted C3-C30 heteroaryloxy group, an unsubstituted or halogen-substituted C4-C30 cycloalkyl group, an unsubstituted or halogen-substituted C3-C30 heterocycloalkyl group, or an unsubstituted or halogen-substituted C2-C100 alkyleneoxide group, and
wherein, in Formula 2, 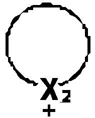 may be a heterocycloalkyl ring or heteroaryl ring containing 1 to 3 heteroatoms and 2 to 30 carbon atoms, wherein the ring may be unsubstituted or substituted with a substituent, X₂ may be =N(R₅)(R₆), -N(R₅)=, =P(R₅)(R₆), or -P(R₅)=, the substituents R₅ and R₆ for the ring may each independently be hydrogen, an unsubstituted or halogen-substituted C1-C30 alkyl group, an unsubstituted or halogen-substituted C1-C30 alkoxy group, or an unsubstituted or halogen-substituted C6-C30 aryl group, an unsubstituted or halogen-substituted C6-C30 aryloxy group, an unsubstituted or halogen-substituted C3-C30 heteroaryl group, an unsubstituted or halogen-substituted C3-C30 heteroaryloxy group, an unsubstituted or halogen-substituted C4-C30 cycloalkyl group, an unsubstituted or halogen-substituted C3-C30 heterocycloalkyl group, or an unsubstituted or halogen-substituted C2-C100 alkylene oxide group, and Y- may be an anion.

For example, the ionic liquid may be represented by Formula 3 or 4: 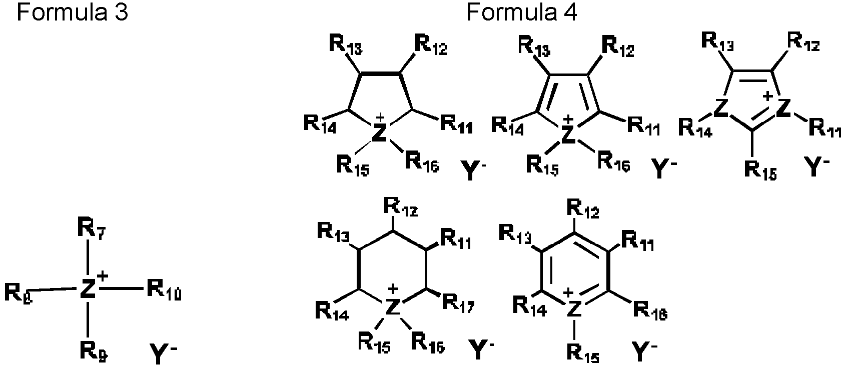 wherein, in Formula 3, Z may be N or P, and
R₇, R₈, R₉, and R₁₀ may each independently be an unsubstituted or halogen-substituted C1-C30 alkyl group, an unsubstituted or halogen-substituted C6-C30 aryl group, an unsubstituted or halogen-substituted C3-C30 heteroaryl group, an unsubstituted or halogen-substituted C4-C30 cycloalkyl group, or an unsubstituted or halogen-substituted C3-C30 heterocycloalkyl group, and
wherein, in Formula 4, Z may be N or P,
R₁₁, R₁₂, R₁₃, R₁₄, R₁₅, R₁₆, and R₁₇ may each independently be hydrogen, an unsubstituted or halogen-substituted C1-C30 alkyl group, an unsubstituted or halogen-substituted C6-C30 aryl group, an unsubstituted or halogen-substituted C3-C30 heteroaryl group, an unsubstituted or halogen-substituted C4-C30 cycloalkyl group, or an unsubstituted or halogen-substituted C3-C30 heterocycloalkyl group, and Y- may be an anion.

For example, the ionic liquid may be represented by one of Formulae 5 to 10: 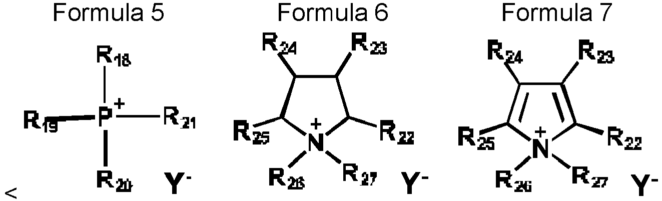 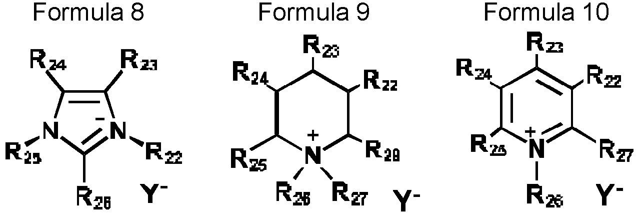
wherein, in Formulae 5 to 10, R₁₈, R₁₉, R₂₀, and R₂₁ may each independently be an unsubstituted or halogen-substituted C1-C30 alkyl group, an unsubstituted or halogen-substituted C6-C30 aryl group, an unsubstituted or halogen-substituted C3-C30 heteroaryl group, an unsubstituted or halogen-substituted C4-C30 cycloalkyl group, or an unsubstituted or halogen-substituted C3-C30 heterocycloalkyl group,
R₂₂, R₂₃, R₂₄, R₂₅, R₂₆, and R₂₇ may each independently be hydrogen, an unsubstituted or halogen-substituted C1-C30 alkyl group, an unsubstituted or halogen-substituted C6-C30 aryl group, an unsubstituted or halogen-substituted C3-C30 heteroaryl group, an unsubstituted or halogen-substituted C4-C30 cycloalkyl group, or an unsubstituted or halogen-substituted C3-C30 heterocycloalkyl group, and Y- may be an anion.

The ionic liquid may include an anion, and the anion may include, for example, BF₄⁻, PF₆⁻, AsF₆⁻, SbF₆⁻, AlCl₄⁻, HSO₄⁻, ClO₄⁻, CH₃SO₃⁻, CF₃CO₂⁻, Cl⁻, Br⁻, I⁻, BF₄⁻, SO₄⁻, PF₆⁻, ClO₄⁻, BOB⁻(bis(oxalate)borate), CF₃SO₃⁻, CF₃CO₂⁻, (FSO₂)₂N⁻, (C₂F₅SO₂)₂N⁻, (C₂F₅SO₂)(CF₃SO₂)N⁻, (CF₃SO₂)₂N⁻, (CF₃)₃PF₃⁻, (CF₃)₄PF₂⁻, (CF₃)₅PF⁻, (CF₃)₆P⁻, SF₅CF₂SO₃⁻, SF₅CHFCF₂SO₃⁻, CF₃CF₂(CF₃)₂CO⁻, (CF₃SO₂)₂CH⁻, (SF₅)₃C⁻, C₂N₃⁻, (O(CF₃)₂C₂(CF₃)₂O)₂PO⁻, (FSO₂)₂N⁻, (CF₃SO₂)2N⁻, or a combination thereof. The anions of the ionic liquids represented by Formulae 1 to 10 may also be selected from the previously described anions.

The ionic liquid may include, for example, 1-methyl-1-propylpyrrolidinium bis(fluorosulfonyl)imide, 1-methyl-1-butylpyrrolidinium bis(fluorosulfonyl)imide, 1-methyl-1-propylpyrrolidinium bis(trifluoromethanesulfonyl)imide, 1-methyl-1-butylpyrrolidinium bis(trifluoromethanesulfonyl)imide, or a combination thereof.

The molecular weight of the ionic liquid may be, for example, 1,000 Daltons or less, 900 Daltons or less, 800 Daltons or less, or 500 Daltons or less. The molecular weight of the ionic liquid may be, for example, in a range of about 50 Daltons to 1,000 Daltons, about 100 Daltons to 900 Daltons, about 100 Daltons to about 800 Daltons, or about 100 Daltons to about 500 Daltons.

The electrolyte layer 30 may be, for example, a self-standing film. The electrolyte layer 30 may be, for example, a flexible self-standing film. Thus, the secondary battery manufacturing process may be simplified and the processability of secondary battery manufacturing may be enhanced.

### Electrolyte layer: porous film

The electrolyte layer 30 may further include a flexible porous film.

The flexible porous film may include, for example, a polyolefin. The polyolefin has an excellent or suitable short-circuit prevention effect and also has a shutdown effect, and thus may enhance the stability of the secondary battery. For example, the flexible porous film may be a film formed of a resin such as a polyolefin such as polyethylene, polypropylene, polybutene, polyvinyl chloride, and/or the like, a mixture or copolymer thereof, and/or the like. However, the present disclosure is not necessarily limited to these resins and any porous film that may be utilized in the art is possible. For example, a porous film formed of a polyolefin resin, a porous film woven with polyolefin-based fibers, non-woven fabric including a polyolefin, an aggregate of insulating material particles, and/or the like may be utilized. For example, the applicability of a binder solution for forming a coating layer that is disposed on the porous film including a polyolefin is excellent or suitable, and by reducing the thickness of a composite film, the proportion of an active material in a battery may be increased, thereby increasing capacity per unit volume.

For example, the polyolefin utilized as a material of the porous film may be a homopolymer such as polyethylene or polypropylene, a copolymer, or a mixture thereof. The polyethylene may be low-density, medium-density or high-density polyethylene. In terms of mechanical strength, high-density polyethylene may be utilized. In other embodiments, two or more types (kinds) of polyethylene may be mixed to impart flexibility. A polymerization catalyst utilized to prepare polyethylene is not limited, and a Ziegler-Natta type or kind catalyst, a Phillips catalyst, a metallocene catalyst, and/or the like may be utilized. To achieve both (e.g., simultaneously) mechanical strength and high permeability, the weight average molecular weight of polyethylene may be, for example, in a range of about 100,000 Daltons to about 12,000,000 Daltons, about 100,000 Daltons to about 8,000,000 Daltons, about 100,000 Daltons to about 5,000,000 Daltons, or about 200,000 Daltons to about 3,000,000 Daltons. Polypropylene may be a homopolymer, a random copolymer, or a block or reduce copolymer, and one thereof or a mixture of two or more thereof may be utilized. In other embodiments, the polymerization catalyst is not limited, and a Ziegler-Natta type or kind catalyst, a metallocene type or kind catalyst, and/or the like may be utilized. Stereoregularity is also not limited, and isotactic, syndiotactic or atactic polypropylene may be utilized. For example, inexpensive isotactic polypropylene may be utilized. A polyolefin other than polyethylene or polypropylene and additives such as an antioxidant may be added to the polyolefin.

For example, the porous film may include a polyolefin such as polyethylene, polypropylene, and/or the like, and a multilayer film of two or more layers may be utilized, and a mixed multilayer film, such as a two-layered polyethylene/polypropylene separator, a three-layered polyethylene/polypropylene/polyethylene separator, a three-layered polypropylene/polyethylene/polypropylene separator, and/or the like may also be utilized. However, the present disclosure is not limited thereto and any material and configuration that may be utilized as a porous substrate in the art is possible.

For example, the porous film may include a diene-based polymer prepared by polymerizing a monomer composition including a diene-based monomer. The diene-based monomer may be a conjugated diene monomer or a non-conjugated diene monomer. For example, the diene-based monomer may include at least one selected from among 1,3-butadiene, isoprene, 2-chloro-1,3-butadiene, 2,3-dimethyl-1,3-butadiene, 2-ethyl-1,3-butadiene, 1,3-pentadiene, chloroprene, vinylpyridine, vinylnorbornene, dicyclopentadiene, and/or 1,4-hexadiene. However, the present disclosure is not necessarily limited thereto and any diene-based monomer that may be utilized in the art is possible.

The thickness of the porous film may be, for example, in a range of about 1 µm to about 100 µm, about 1 µm to about 30 µm, about 5 µm to about 20 µm, about 5 µm to about 15 µm, or about 5 µm to about 10 µm. If (e.g., when) the thickness of the porous film is too thin, then it may be difficult to maintain the mechanical properties of the porous film, and if (e.g., when) the thickness of the porous film is too thick, then the internal resistance of the secondary battery may increase.

The porosity of the porous film may be, for example, in a range of about 5 vol% to about 95 vol%, about 10 vol% to about 90 vol%, about 20 vol% to about 80 vol%, or about 30 vol% to about 70 vol%. If (e.g., when) the porosity is too low, then the internal resistance of the electrolyte layer 30 may excessively increase. If (e.g., when) the porosity of the porous film is too high, then it may be difficult to maintain the mechanical properties of the porous film. The porosity of the porous film may be measured by, for example, a nitrogen adsorption method.

The pore size of the porous film may be, for example, in a range of about 0.01 µm to about 10 µm, about 0.01 µm to about 5 µm, about 0.01 µm to about 2 µm, about 0.01 µm to about 1 µm, about 0.01 µm to about 0.5 µm, or about 0.1 µm to about 0.5 µm. If (e.g., when) the pore size of the porous film is too small, then the internal resistance of the electrolyte layer 30 may excessively increase, and if (e.g., when) the pore size of the porous substrate is too large, then the possibility of a short circuit in the secondary battery may increase. The pore size of the porous film may be measured by, for example, a nitrogen adsorption method.

The electrolyte layer 30 may be included as a composite film. The composite film may further include a coating layer on one or both (e.g., opposite) surfaces of the previously described porous film (e.g., at least one surface of the porous film).

In the composite film, the coating layer may include, for example, a filler. The filler is not limited, and any filler that may be utilized in the art is possible.

In the composite film, the filler may act as a support. If (e.g., when) the porous film attempts to shrink at high temperatures, then the filler may support the porous film, and thus, the shrinkage of the porous film may be suppressed or reduced. By including the filler in the coating layer disposed on the composite film, sufficient porosity may be secured and mechanical properties may be enhanced. The secondary battery including such a composite film may secure enhanced structural stability. The average particle diameter of the filler included in the coating layer may be in a range of about 300 nm to about 2 µm, about 300 nm to about 1.5 µm, or about 300 nm to about 1.0 µm. The average particle diameter of the filler may be defined as the number average particle diameter of particles as measured utilizing, for example, a laser scattering particle size distribution analyzer (e.g., Horiba LA-920). By utilizing a filler having such an average particle diameter, a coating layer may be easily formed to an appropriate or suitable thickness. The composite film including such a coating layer may have appropriate or suitable porosity. If (e.g., when) the average particle diameter of the filler is too small, then the mechanical properties of the composite film may deteriorate.

The filler may include inorganic particles, organic particles, or a combination thereof. The inorganic particles may be a metal oxide, a metalloid oxide, or a combination thereof. For example, as the inorganic particles, alumina, silica, boehmite, magnesia, or a combination thereof may be utilized. Alumina, silica, and/or the like have small particle sizes, and thus are easy to prepare a dispersion. For example, the inorganic particles may be Al₂O₃, SiO₂, TiO₂, SnO₂, CeO₂, NiO, CaO, ZnO, MgO, ZrO₂, Y₂O₃, SrTiOs, BaTiOs, MgF₂, Mg(OH)₂, or a combination thereof. The inorganic particles may be in a spherical form, a plate form, a fibrous form, and/or the like. However, the present disclosure is not limited thereto and any form that may be utilized in the art is possible. The organic particles may be a cross-linked polymer. The organic particles may be a highly cross-linked polymer that does not have a glass transition temperature (Tg). If (e.g., when) the highly cross-linked polymer is utilized, then heat resistance may be enhanced and shrinkage of the porous substrate at high temperatures may be effectively suppressed or reduced. The organic particles may include, for example, an acrylate-based compound and a derivative thereof, a diallyl phthalate-based compound and a derivative thereof, a polyimide-based compound and a derivative thereof, a polyurethane-based compound and a derivative thereof, a copolymer thereof, or a combination thereof. However, the present disclosure is not limited thereto and any filler that may be utilized in the art is possible. For example, the filler may be cross-linked polystyrene particles or cross-linked polymethyl methacrylate particles. The filler may be secondary particles formed by agglomerating primary particles. In a separator including the filler, which is a secondary particle, the porosity of the coating layer may be increased, and thus, a lithium battery having excellent or suitable high-output characteristics may be provided. The glass transition temperature of the organic particle may be for example measured by DSC (Differential Scanning Calorimeter), DMA (Dynamic Mechanical Analyzer), TMA (Thermomechanical Analyzer), and/or TGA (Thermogravimetric Analyzer).

In the composite film, the coating layer may be disposed on, for example, both (e.g., opposite) surfaces of the porous film. The thickness of the coating layer may be in a range of about 0.1 µm to about 5 µm, about 0.5 µm to about 5 µm, or about 0.5 µm to about 3 µm, with respect to one surface thereof. If the thickness of the coating layer is within the previously described range, a composite film including the coating layer may provide enhanced adhesion and air permeability. In other embodiments, by disposing the coating layer on both (e.g., opposite) surfaces of the porous substrate, the adhesion between a composite binder and an electrode active material layer may be further enhanced, and thus, a change in the volume of the lithium battery may be suppressed or reduced. Coating layers disposed on both (e.g., opposite) surfaces of the composite film may have the same composition. By disposing coating layers having the same composition on both (e.g., opposite) surfaces of the composite film, the same adhesion acts on the cathode layer and/or the anode layer, and thus, a change in the volume of the secondary battery may be uniformly suppressed or reduced.

In the composite film, the coating layer may include, for example, a blend of a binder and a filler. The coating layer may include a blend of a binder and a filler, in which the binder and the filler are uniformly mixed. By including the blend of a binder and a filler in the coating layer, the adhesion between the porous substrate and the electrode active material layer may be further enhanced, compared to a multilayered structure in which a binder and a filler are arranged as separate layers. The mix weight ratio of the binder to the filler in the coating layer may be in a range of about 1:1 to about 1:8. For example, the ratio of the binder to the filler in the coating layer may be in a range of about 1:1.5 to about 1:7, about 1:2 to about 1:6, or about 1:2 to about 1:5. If (e.g., when) the ratio of the binder to the filler is within the previously described range, then both (e.g., simultaneously) enhanced adhesion and enhanced air permeability may be obtained.

The binder included in the coating layer may be a fluorine-based polymer. The binder included in the coating layer may be a fluorine-based polymer in which some or all of hydrogen atoms linked to carbon atoms included in the binder are substituted with fluorine. For example, the fluorine-based polymer may be a polymer including repeating units derived from at least one monomer selected from among a vinylidine fluoride monomer, an ethylene tetrafluoride monomer, and/or propylene hexafluoride. For example, the binder included in the coating layer may be a fluorine-based homopolymer. The binder included in the coating layer may be a copolymer. The binder included in the coating layer may be a fluorine-based copolymer. The fluorine-based copolymer included in the coating layer may be a copolymer of an ethylene tetrafluoride monomer and another monomer. Other monomers utilized together with the ethylene tetrafluoride monomer may be at least one fluorine-containing monomer selected from among vinylidene fluoride, hexafluoropropylene, chlorotrifluoroethylene, and/or perfluoroalkyl vinyl ether. For example, the fluorine-based copolymer included in the coating layer may be an ethylene tetrafluoride-vinylidene fluoride copolymer, an ethylene tetrafluoride-hexafluoropropylene copolymer, an ethylene tetrafluoride-chlorotrifluoroethylene copolymer, ethylene tetrafluoride-perfluoroalkyl vinyl ether, and/or the like. The fluorine-based copolymer included in the coating layer may be a copolymer of a vinylidine fluoride monomer and another monomer. For example, the fluorine-based copolymer included in the coating layer may be a copolymer of a vinylidene fluoride monomer and at least one fluorine-containing monomer selected from among hexafluoropropylene, chlorotrifluoroethylene, fluorovinyl, and/or perfluoroalkyl vinyl ether. For example, the vinylidine-based monomer may be vinylidene fluoride homopolymer, a vinylidene fluoride-hexafluoropropylene copolymer, a vinylidene fluoride-chlorotrifluoroethylene copolymer, and/or the like. The fluorine-based polymer included in the coating layer may further include a hydrophilic functional group. By further including the hydrophilic functional group, enhanced adhesion to the electrode active material layer may be obtained. The hydrophilic functional group may be a polar functional group. The hydrophilic functional group that is further included in the fluorine-based polymer included in the coating layer may be at least one selected from among a carboxylic acid group, a sulfonic acid group, a phosphoric acid group, an acid anhydride group, a hydroxyl group, and/or a salt thereof. However, the present disclosure is not necessarily limited thereto and any hydrophilic functional group that may be utilized in the art is possible. The fluorine-based polymer included in the coating layer may have a weight average molecular weight of 100,000 Daltons or greater. For example, the weight average molecular weight of the fluorine-based polymer included in the coating layer may be in a range of about 100,000 Daltons to about 1,500,000 Daltons. For example, the weight average molecular weight of the fluorine-based polymer included in the coating layer may be in a range of about 300,000 Daltons to about 1,500,000 Daltons. For example, the weight average molecular weight of the fluorine-based polymer included in the coating layer may be in a range of about 500,000 Daltons to about 1,500,000 Daltons. For example, the weight average molecular weight of the fluorine-based polymer included in the coating layer may be in a range of about 1,000,000 Daltons to about 1,500,000 Daltons. The weight average molecular weight may be a polystyrene-converted value by gel permeation chromatography. If (e.g., when) the weight average molecular weight of the fluorine-based polymer included in the coating layer is within the previously described range, then the adhesion to a cathode active material layer may be further enhanced. If (e.g., when) the weight average molecular weight of the fluorine-based polymer included in the coating layer is too small, then the adhesion may be reduced, and if (e.g., when) the weight average molecular weight thereof is too large, then it is not easy to prepare a binder composition.

### Cathode layer

### Cathode layer: cathode active material

Referring to FIGS. 1 to 4, the cathode layer 10 includes: a cathode current collector 11; and a cathode active material layer 12 on one or both (e.g., opposite) sides (e.g., surfaces) of the cathode current collector 11 (e.g., at least one side of the cathode current collector 11).

The cathode active material layer 12 may include, for example, an alkali metal-containing sulfide-based cathode active material or an alkali metal-containing oxide-based cathode active material. The alkali metal may include, for example, lithium or sodium. The cathode active material layer 12 may include, for example, a lithium-containing sulfide-based cathode active material, a lithium-containing oxide-based cathode active material, a sodium-containing sulfide-based cathode active material, or a sodium-containing oxide-based cathode active material.

The cathode active material layer 12 may include, for example, a Li₂S-containing composite as the alkali metal-containing sulfide-based cathode active material.

The Li₂S-containing composite may be included in an amount of about 10 parts by weight to about 90 parts by weight, about 30 parts by weight to about 90 parts by weight, about 40 parts by weight to about 90 parts by weight, about 40 parts by weight to about 80 parts by weight, about 50 parts by weight to about 80 parts by weight, or about 50 parts by weight to about 70 parts by weight, with respect to 100 parts by weight of the cathode active material layer 12. If (e.g., when) the amount of the Li₂S-containing composite is excessively reduced, then the energy density of the secondary battery may deteriorate. If (e.g., when) the amount of the Li₂S-containing composite increases excessively, then deterioration of the cathode layer due to a volume change in the cathode layer during charging and discharging may be accelerated. As a result, the cycle characteristics of the secondary battery 1 may deteriorate.

The Li₂S-containing composite may include, for example, a composite of Li₂S and a carbon-based material, a composite of Li₂S, a carbon-based material, and a solid electrolyte, a composite of Li₂S and a solid electrolyte, a composite of Li₂S, a carbon-based material, and a lithium salt, a composite of Li₂S and a lithium salt, a composite of Li₂S and a metal carbide, a composite of Li₂S, a carbon-based material, and a metal carbide, a composite of Li₂S and a metal nitride, a composite of Li₂S, a carbon-based material, and a metal nitride, or a combination thereof.

The Li₂S-containing composite is distinguished from a simple mixture of Li₂S and other materials. In the simple mixture of Li₂S and other materials, the interfacial resistance between Li₂S and other materials may be maintained, and thus, the internal resistance of the cathode layer including these may be maintained high. Thus, the cycle characteristics of the secondary battery 1 including these may deteriorate. In contrast, in the Li₂S-containing composite, the interfacial resistance between Li₂ and other materials may be reduced by mechanochemically or chemically forming a composite of Li₂S and other materials, and thus, the internal resistance of the cathode layer including these may be reduced. Thus, the cycle characteristics of the secondary battery 1 including the Li₂S-containing composite may be enhanced.

The composite of Li₂S and a carbon-based material may include a carbon-based material. As the carbon-based material, for example, any material containing carbon atoms that may be utilized as a conductive material in the art is possible. The carbon-based material may be, for example, crystalline carbon, amorphous carbon, or a combination thereof. The carbon-based material may be, for example, a fired or sintered product of a carbon precursor. The carbon-based material may be, for example, a carbon nanostructure. The carbon nanostructure may be, for example, a one-dimensional carbon nanostructure, a two-dimensional carbon nanostructure, a three-dimensional carbon nanostructure, or a combination thereof. The carbon nanostructure may be, for example, (one or more of) carbon nanotubes, carbon nanofibers, carbon nanobelts, carbon nanorods, graphene, or a combination thereof. The carbon-based material may be, for example, a porous carbon-based material or a non-porous carbon-based material. The porous carbon-based material may include, for example, periodic and ordered two-dimensional or three-dimensional pores. The porous carbon-based material may be, for example, carbon black such as Ketjen black, acetylene black, Denka black, thermal black, channel black, and/or the like, graphite, activated carbon, or a combination thereof. The carbon-based material may be, for example, in the form of particles, a sheet, a flake, and/or the like. However, the present disclosure is not limited thereto and any carbon-based material that may be utilized in the art is possible. The carbon-based material may include, for example, a fibrous carbon-based material. The aspect ratio of the fibrous carbon-based material may be, for example, in a range of about 2 to about 30, about 2 to about 20, about 2 to about 10, about 2 to about 8, about 2 to about 5, or about 2 to about 4. The fibrous carbon-based material may include a fibrous carbon nanostructure. The fibrous carbon nanostructure may include, for example, carbon nanofibers, carbon nanotubes, carbon nanobelts, carbon nanorods, or a combination thereof. The aspect ratio of the fibrous carbon-based material, e.g., a ratio of diameter and length of the fibrous carbon-based material may be determined from SEM images.

A method of preparing the composite of Li₂S and a carbon-based material may be a dry method, a wet method, or a combination thereof. However, the present disclosure is not limited to these preparation methods and any method that may be utilized in the art is possible. The method of preparing the composite of Li₂S and a carbon-based material may be, for example, milling, heat treatment, deposition, and/or the like. However, the present disclosure is not necessarily limited to these methods and any method that may be utilized in the art is possible.

The composite of Li₂S, a carbon-based material, and a solid electrolyte may include a carbon-based material and a solid electrolyte. More details on the carbon-based material may be referred to those provided previously with regard to the composite of Li₂S and a carbon-based material. For example, any solid electrolyte that may be utilized as an ion conductive material in the art is possible. The solid electrolyte may be, for example, an inorganic electrolyte. The solid electrolyte may be, for example, a crystalline solid electrolyte, an amorphous solid electrolyte, or a combination thereof. The solid electrolyte may be, for example, a sulfide-based solid electrolyte, an oxide-based solid electrolyte, or a combination thereof. The sulfide-based solid electrolyte may include, for example, lithium (Li), sulfur (S), and phosphorus (P), and may optionally further include a halogen element. The sulfide-based solid electrolyte may be selected from sulfide-based solid electrolytes utilized in the cathode layer. For example, the sulfide-based solid electrolyte may have an ionic conductivity of 1×10⁻⁵ S/cm or greater at room temperature. The oxide-based solid electrolyte may include, for example, Li, oxygen (O), and a transition metal element, and may optionally further include other elements. For example, the oxide-based solid electrolyte may be a solid electrolyte having an ionic conductivity of 1×10⁻⁵ S/cm or more at room temperature. The oxide-based solid electrolyte may be selected from oxide-based solid electrolytes utilized in the cathode layer.

The composite of Li₂S and a solid electrolyte may include a solid electrolyte. More details on the solid electrolyte may be referred to those provided previously with regard to the composite of Li₂S, a carbon-based material, and a solid electrolyte.

The complex of Li₂S and a lithium salt may include Li₂S and a lithium salt. The lithium salt may be, for example, a binary compound or a ternary compound. The lithium salt may be a S-free compound. For example, the lithium salt may be a binary compound consisting of lithium and one element selected from Groups 13 to 17 of the periodic table of elements. For example, the lithium salt may be a ternary compound consisting of lithium and two elements selected from Groups 13 to 17 of the periodic table of elements. The binary compound may include, for example, Lil, LiBr, LiCl, LiF, LiH, Li₂O, Li₂Se, Li₂Te, Li₃N, LisP, Li₃As, Li₃Sb, Li₃Al₂, LiBs, or a combination thereof. The ternary compound may include, for example, Li₃OCl, LiPF₆, LiBF₄, LiSbF₆, LiAsF₆, LiClO₄, LiAlO₂, LiAlCl₄, LiNO₃, Li₂CO₃, LiBH₄, Li₂SO₄, Li₃BO₃, Li₃PO₄, Li₄NCl, Li₅NCl₂, Li₃BN₂, or a combination thereof. The lithium salt may be, for example, at least one lithium halide compound selected from among LiF, LiCl, LiBr, and/or LiI. The composite of Li₂S and a lithium salt may be, for example, a composite of Li₂ and lithium halide. More enhanced ionic conductivity may be provided by including the lithium halide compound included in the composite of Li₂ and a lithium salt. The composite of Li₂S and a lithium salt is distinguished from a simple mixture of Li₂S, a carbon-based material, and a lithium salt. The simple mixture of Li₂S and a lithium salt may provide high interfacial resistance by failing to maintain the compact interface between Li₂S and the lithium salt, resulting in deteriorated lifespan characteristics of the secondary battery 1.

The composite of Li₂S, a carbon-based material, and a lithium salt may include a carbon-based material and a lithium salt. More details on the carbon-based material may be referred to those provided previously with regard to the composite of Li₂S and a carbon-based material. More details on the lithium salt may be referred to those provided previously with regard to the composite of Li₂S and a lithium salt.

The composite of Li₂S and a metal carbide may include a metal carbide. The metal carbide may be, for example, a two-dimensional metal carbide. The two-dimensional metal carbide may be represented by, for example, Mₙ₊₁CₙTₓ (wherein M is a transition metal, T is an end group, T is O, OH, and/or F, n=1, 2, or 3, and x is the number of the end groups). The two-dimensional metal carbide may be, for example, Ti₂CTₓ, (Ti_{0.5}, Nb_{0.5})₂CTₓ, Nb₂CTₓ, V₂CTₓ, Ti₃C₂Tₓ, (V_{0.5}, Cr_{0.5})₃C₂Tₓ, Ti₃CNTₓ, Ta₄C₃Tₓ, Nb₄C₃Tₓ, or a combination thereof. The surface of the two-dimensional metal carbide may be terminated with O, OH, and/or F.

The composite of Li₂S, a carbon-based material, and a metal carbide may include a carbon-based material and a metal carbide. More details on the carbon-based material may be referred to those provided previously with regard to the composite of Li₂S and a carbon-based material. More details on the metal carbide may be referred to those provided previously with regard to the composite of Li₂S and a metal carbide.

The composite of Li₂S and a metal nitride may include a metal nitride. The metal nitride may be, for example, a two-dimensional metal nitride. The two-dimensional metal nitride may be represented by, for example, Mₙ₊₁NₙTₓ (wherein M is a transition metal, T is an end group, T is O, OH, and/or F, n=1, 2, or 3, and x is the number of the end groups). The surface of the two-dimensional metal nitride may be terminated with O, OH, and/or F.

The Li₂S-containing composite may be, for example, a composite of Li₂S, a lithium salt, and a carbon-based material. The Li₂S-containing composite may be, for example, a composite of Li₂S, a lithium salt, and a fibrous carbon-based material.

For example, about 10 parts by weight to about 80 parts by weight of Li₂S, about 1 part by weight to about 40 parts by weight of the lithium salt, and about 1 part by weight to about 20 parts by weight of the carbon-based material may be included with respect to 100 parts by weight of the composite of Li₂S, the lithium salt, and the carbon-based material. The amount of Li₂S included in the composite may be, for example, in a range of about 10 parts by weight to about 80 parts by weight, about 20 parts by weight to about 70 parts by weight, about 30 parts by weight to about 60 parts by weight, or about 40 parts by weight to about 60 parts by weight, with respect to 100 parts by weight of the composite. The amount of the lithium salt included in the composite may be, for example, in a range of about 10 parts by weight to about 40 parts by weight, about 15 parts by weight to about 40 parts by weight, about 20 parts by weight to about 40 parts by weight, or about 25 parts by weight to about 35 parts by weight, with respect to 100 parts by weight of the composite. The amount of the carbon-based material included in the composite may be, for example, in a range of about 1 part by weight to about 20 parts by weight, about 5 parts by weight to about 20 parts by weight, or about 5 parts by weight to about 15 parts by weight, with respect to 100 parts by weight of the composite. If (e.g., when) the amounts of the Li₂S, the lithium salt, and the carbon-based material in the composite are within the previously recited ranges, then the secondary battery 1 including the composite may exhibit further enhanced ionic conductivity and/or electronic conductivity.

The composite of Li₂S, a carbon-based material, and a metal nitride may include a carbon-based material and a metal nitride. More details on the carbon-based material may be referred to those provided previously with regard to the composite of Li₂S and a carbon-based material. More details on the metal nitride may be referred to those provided previously with regard to the composite of Li₂S and a metal nitride.

The cathode active material layer 12 may further include, for example, a sulfide-based compound that is distinguished from the previously described cathode active material. The sulfide-based compound may be, for example, a compound containing a metal element other than Li and a sulfur element. For example, the sulfide-based compound may be a compound containing a metal element belonging to Groups 1 to 14 of the periodic table of elements having an atomic weight of 10 or greater and a sulfur element. The sulfide-based compound may be, for example, FeS₂, VS₂, NaS, MnS, FeS, NiS, CuS, or a combination thereof. The cycle characteristics of the secondary battery 1 may be further enhanced because the cathode active material layer 12 further includes a sulfide-based compound. The amount of the sulfide-based compound included in the cathode active material layer 12 may be 10 wt% or less, 5 wt% or less, 3 wt% or less, or 1 wt% or less, with respect to the total weight of the cathode active material layer 12.

The cathode active material layer 12 may include, for example, lithium metal oxide as the alkali metal-containing oxide-based cathode active material.

Any lithium metal oxide that may be commonly utilized in the art may be utilized without limitation. The lithium metal oxide may be, for example, at least one composite oxide of lithium and a metal selected from among cobalt, manganese, nickel, and/or a combination thereof, and may be, for example, a compound represented by any one of the following formulae: LiₐA_{1-b}B'_{b}D₂ where 0.90 ≤ a ≤ 1 and 0 ≤ b ≤ 0.5; LiₐE_{1-b}B'_{b}O_{2-c}D_{c} where 0.90 ≤ a ≤ 1, 0 ≤ b ≤ 0.5, and 0 ≤ c ≤ 0.05; LiE_{2-b}B'_{b}O_{4-c}D_{c} where 0 ≤ b ≤ 0.5 and 0 ≤ c ≤ 0.05; LiₐNi_{1-b-c}Co_{b}B'_{c}O_{α} where 0.90 ≤ a ≤ 1, 0 ≤ b ≤ 0.5, 0 ≤ c ≤ 0.05, and 0 < α ≤ 2; LiₐNi_{1-b-c}Co_{b}B'_{c}O_{2-α'}F'_{α} where 0.90 ≤ a ≤ 1, 0 ≤ b ≤ 0.5, 0 ≤ c ≤ 0.05, and 0 < α < 2; LiₐNi_{1-b-c}Mn_{b}B'_{c}D_{α} where 0.90 ≤ a ≤ 1, 0 ≤ b ≤ 0.5, 0 ≤ c ≤ 0.05, and 0 < α ≤ 2; LiₐNi_{1-b-c}Mn_{b}B'_{c}O_{2-α}F'_{α} where 0.90 ≤ a ≤ 1, 0 ≤ b ≤ 0.5, 0 ≤ c ≤ 0.05, and 0 < α < 2; LiₐNi_{b}E_{c}G_{d}O₂ where 0.90 ≤ a ≤ 1, 0 ≤ b ≤ 0.9, 0 ≤ c ≤ 0.5, and 0.001 ≤ d ≤ 0.1; LiₐNi_{b}Co_{c}Mn_{d}GₑO₂ where 0.90 ≤ a ≤ 1, 0 ≤ b ≤ 0.9, 0 ≤ c ≤ 0.5, 0 ≤ d ≤0.5, and 0.001 ≤ e ≤ 0.1; LiₐNiG_{b}O₂ where 0.90 ≤ a ≤ 1 and 0.001 ≤ b ≤ 0.1; LiₐCoG_{b}O₂ where 0.90 ≤ a ≤ 1 and 0.001 ≤ b ≤ 0.1; LiₐMnG_{b}O₂ where 0.90 ≤ a ≤ 1 and 0.001 ≤ b ≤ 0.1; LiₐMn₂G_{b}O₄ where 0.90 ≤ a ≤ 1 and 0.001 ≤ b ≤ 0.1; QO₂; V₂O₅; LiV₂O₅; LiI'O₂; LiNiVO₄; Li_{(3-f)}J₂(PO₄)₃ where 0 ≤ f ≤ 2; Li_{(3-f)}Fe₂(PO₄)₃ where 0 ≤ f ≤ 2; and LiFePO₄.

In the formulae of the previously described compounds, A may be nickel (Ni), cobalt (Co), manganese (Mn), or a combination thereof, B' may be aluminum (Al), Ni, Co, Mn, chromium (Cr), iron (Fe), magnesium (Mg), strontium (Sr), vanadium (V), a rare earth element, or a combination thereof, D may be oxygen (O), fluorine (F), sulfur (S), phosphorus (P), or a combination thereof, E may be Co, Mn, or a combination thereof, F' may be F, S, P, or a combination thereof, G may be Al, Cr, Mn, Fe, lanthanum (La), cerium (Ce), strontium (Sr), V, or a combination thereof, Q may be titanium (Ti), molybdenum (Mo), Mn, or a combination thereof, I' may be Cr, V, Fe, scandium (Sc), yttrium (Y), or a combination thereof, and J may be V, Cr, Mn, Co, Ni, copper (Cu), or a combination thereof. Also, the previously mentioned compound with a coating layer on the surface may be utilized, or a mixture of the compound described previously and another compound having a coating layer may be utilized. The coating layer disposed on the surface of the previously described compound may include, for example, a coating element compound, such as an oxide of a coating element, a hydroxide of a coating element, an oxyhydroxide of a coating element, an oxycarbonate of a coating element, or a hydroxyl carbonate of a coating element. The compound constituting the coating layer may be amorphous or crystalline. The coating element included in the coating layer may be Mg, Al, Co, potassium (K), sodium (Na), calcium (Ca), silicon (Si), Ti, V, tin (Sn), germanium (Ge), gallium (Ga), boron (B), arsenic (As), zirconium (Zr), or a mixture thereof. A coating layer formation method may be selected from methods that do not adversely affect physical properties of the cathode active material. The coating layer formation method may be, for example, spray coating, immersion, and/or the like. The coating layer formation methods will be obvious to one of ordinary skill in the art, and thus, detailed descriptions thereof will not be provided herein.

The cathode active material layer 12 may include, for example, lithium transition metal oxides represented by Formulae 11 to 18 as alkali metal-containing oxide-based cathode active materials:

Formula 11 LiₐNiₓCO_{y}M_{z}O_{2-b}A_{b}

wherein, in Formula 11, 1.0≤a≤1.2, 0≤b≤0.2, 0.8≤x<1, 0≤y≤0.3, 0<z≤0.3, and x+y+z=1,
M may be manganese (Mn), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminum (Al), boron (B), or a combination thereof, and
A may be F, S, Cl, Br, or a combination thereof,

   Formula 12 LiNiₓCo_{y}Mn_{z}O₂

   Formula 13 LiNiₓCo_{y}Al_{z}O₂
wherein, in Formulae 12 and 13, 0.8≤x≤0.95, 0≤y≤0.2, 0<z≤0.2, and x+y+z=1,

   Formula 14 LiNiₓCo_{y}Mn_{z}Al_{w}O₂
wherein, in Formula 14, 0.8≤x≤0.95, 0≤y≤0.2, 0<z≤0.2, 0<w≤0.2, and x+y+z+w=1,

   Formula 15 LiₐCoₓM_{y}O_{2-b}A_{b}
wherein, in Formula 15,1.0≤a≤1.2, 0≤b≤0.2, 0.9≤x≤1, 0≤y≤0.1, and x+y=1,
M may be manganese (Mn), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminum (Al), boron (B), or a combination thereof, and
A may be F, S, Cl, Br, or a combination thereof,

   Formula 16 LiₐNiₓMn_{y}M'_{z}O_{2-b}A_{b}
wherein, in Formula 16, 1.0≤a≤1.2, 0≤b≤0.2, 0<x≤0.3, 0.5≤y<1, 0<z≤0.3, and x+y+z=1,
M' may be cobalt (Co), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminum (Al), boron (B), or a combination thereof, and
A may be F, S, Cl, Br, or a combination thereof,

   Formula 17 LiₐM1ₓM2_{y}PO_{4-b}X_{b}
wherein, in Formula 17, 0.90≤a≤1.1, 0≤x≤0.9, 0≤y≤0.5, 0.9<x+y<1.1, and 0≤b≤2,
M1 may be chromium (Cr), manganese (Mn), iron (Fe), cobalt (Co), nickel (Ni), copper (Cu), zirconium (Zr), or a combination thereof,
M2 may be magnesium (Mg), calcium (Ca), strontium (Sr), barium (Ba), titanium (Ti), zinc (Zn), boron (B), niobium (Nb), gallium (Ga), indium (In), molybdenum (Mo), tungsten (W), aluminum (Al), silicon (Si), chromium (Cr), vanadium (V), scandium (Sc), yttrium (Y), or a combination thereof, and X may be O, F, S, P, or a combination thereof,

   Formula 18 LiₐM3_{z}PO₄
wherein, in Formula 18, 0.90≤a≤1.1 and 0.9≤z≤1.1, and
M3 may be chromium (Cr), manganese (Mn), iron (Fe), cobalt (Co), nickel (Ni), copper (Cu), zirconium (Zr), or a combination thereof.

### Cathode layer: solid electrolyte

The cathode active material layer 12 may further include, for example, a solid electrolyte. The solid electrolyte may include, for example, a sulfide-based solid electrolyte, an oxide-based solid electrolyte, or a combination thereof.

The solid electrolyte may be, for example, a sulfide-based solid electrolyte. The sulfide-based solid electrolyte may be, for example, at least one selected from among Li₂S-P₂S₅, Li₂S-P₂S₅-LiX where X is a halogen element, Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ where m and n are positive numbers and Z is Ge, Zn, or Ga, Li₂S-GeS₂, Li₂S-SiS₂-Li₃PO₄, Li₂S-SiS₂-LiₚMO_{q} where p and q are positive numbers and M is one of P, Si, Ge, B, Al, Ga, and In Li₇₋ₓPS₆₋ₓClₓ where 0≤x≤2, Li₇₋ₓPS₆₋ₓBrₓ where 0≤x≤2, and/or Li₇₋ₓPS₆₋ₓIₓ where 0≤x≤2. The sulfide-based solid electrolyte may be prepared by, for example, treating starting materials such as Li₂S, P₂S₅, and/or the like by melting quenching, mechanical milling, and/or the like. In other embodiments, after such treatment, heat treatment may be performed. The solid electrolyte may be amorphous or crystalline, or in a mixed state. In other embodiments, the solid electrolyte may include, for example, sulfur (S), phosphorus (P), and lithium (Li) as at least constituent elements among the sulfide-based solid electrolyte materials as described previously. For example, the solid electrolyte may be a material including Li₂S-P₂S₅. If (e.g., when) a material including Li₂S-P₂S₅ is utilized as a sulfide-based solid electrolyte material for forming the solid electrolyte, then the mixing molar ratio of Li₂S to P₂S₅ may be, for example, in a range of about 20:80 to about 90:10, about 25:75 to about 90:10, about 30:70 to about 70:30, or about 40:60 to about 60:40.

The sulfide-based solid electrolyte may include, for example, an argyrodite-type or kind solid electrolyte represented by Formula 19:

Formula 19 Li⁺₁₂₋ₙ₋ₓAⁿ⁺X²⁻₆₋ₓY⁻ₓ

wherein, in Formula 19, A may be P, As, Ge, Ga, Sb, Si, Sn, Al, In, Ti, V, Nb, or Ta, X may be S, Se, or Te, Y may be Cl, Br, I, F, CN, OCN, SCN, or N₃, 1≤n≤5, and 0≤x≤2. The sulfide-based solid electrolyte may be, for example, an argyrodite-type or kind compound including at least one selected from Li₇₋ₓPS₆₋ₓClₓ where 0≤x≤2, Li₇₋ₓPS₆₋ₓBrₓ where 0≤x≤2, and Li₇₋ₓPS₆₋ₓIₓ where 0≤x≤2. The sulfide-based solid electrolyte may be, for example, an argyrodite-type or kind compound including at least one selected from Li₆PS₅Cl, Li₆PS₅Br, and LisPSsl.

The oxide-based solid electrolyte may be, for example, Li_{1+x+y}AlₓTi₂₋ₓSi_{y}P_{3-y}O₁₂ where 0<x<2 and 0≤y<3, BaTiO₃, Pb(Zr,Ti)O₃(PZT), Pb₁₋ₓLaₓZr_{1-y} Ti_{y}O₃(PLZT) where 0≤x<1 and 0≤y<1, PB(Mg₃Nb_{2/3})O₃-PbTiO₃(PMN-PT), HfO₂, SrTiOs, SnO₂, CeO₂, Na₂O, MgO, NiO, CaO, BaO, ZnO, ZrO₂, Y₂O₃, Al₂O₃, TiO₂, SiO₂, Li₃PO₄, LiₓTi_{y}(PO₄)₃ where 0<x<2 and 0<y<3, LiₓAl_{y}Ti_{z}(PO₄)₃ where 0<x<2, 0<y<1, and 0<z<3, Li_{1+x+y}(Al, Ga)ₓ(Ti, Ge)₂₋ₓSi_{y}P_{3-y}O₁₂ where 0≤x≤1 and 0≤y≤1, LiₓLa_{y}TiO₃ where 0<x<2 and 0<y<3, Li₂O, LiOH, Li₂CO₃, LiAlO₂, Li₂O-Al₂O₃-SiO₂-P₂O₅-TiO₂-GeO₂, Li₃₊ₓLa₃M₂O₁₂ where M = Te, Nb, or Zr, and 0≤x≤10, or a combination thereof. The oxide-based solid electrolyte may be prepared by, for example, a sintering method and/or the like.

The oxide-based solid electrolyte may be, for example, a garnet-type or kind solid electrolyte selected from Li₇La₃Zr₂O₁₂(LLZO) and Li₃₊ₓLa₃Zr₂₋ₐMₐO₁₂ (M= doped LLZO, M=Ga, W, Nb, Ta, or Al, 0<a<2, and 0≤x≤10).

The solid electrolyte may be included in an amount of about 10 parts by weight to about 60 parts by weight, about 10 parts by weight to about 50 parts by weight, about 20 parts by weight to about 50 parts by weight, or about 30 parts by weight to about 50 parts by weight, with respect to 100 parts by weight of the cathode active material layer 12. If (e.g., when) the amount of the solid electrolyte is excessively reduced, then the internal resistance of the cathode layer 10 may increase, resulting in deteriorated cycle characteristics of the secondary battery. If (e.g., when) the amount of the sulfide-based solid electrolyte increases excessively, then the energy density of the secondary battery 1 may be reduced.

### Cathode layer: conductive material

The cathode active material layer 12 may further include a conductive material. The conductive material may be, for example, a carbon-based conductive material, a metal-based conductive material, or a combination thereof. The carbon-based conductive material may be, for example, graphite, carbon black, acetylene black, Ketjen black, carbon fiber, or a combination thereof. However, the present disclosure is not limited thereto and any material that may be utilized as a carbon-based conductive material in the art is possible. The metal-based conductive material may be metal powder, a metal fiber, or a combination thereof. However, the present disclosure is not limited thereto and any metal-based conductive material utilized in the art is possible. The amount of the conductive material included in the cathode active material layer 12 may be, for example, in a range of about 1 wt% to about 30 wt%, about 1 wt% to about 20 wt%, or about 1 wt% to about 10 wt%, with respect to the total weight of the cathode active material layer 12.

The cathode active material layer 12 may include a carbon-based material, and the carbon-based material may be disposed only in a composite cathode active material. The cathode active material layer 12 may not further include a separate carbon-based material other than the composite cathode active material including the carbon-based material. The energy density of the cathode layer and the secondary battery 1 may be enhanced and the manufacturing process may be simplified, because the cathode active material layer 12 may not include (e.g., may exclude) a separate carbon-based material.

### Cathode layer: binder

The cathode active material layer 12 may further include a binder. The binder may be, for example, styrene butadiene rubber (SBR), polytetrafluoroethylene, polyvinylidene fluoride, or polyethylene. However, the present disclosure is not limited thereto and any binder utilized in the art is possible. The amount of the binder included in the cathode active material layer 12 may be, for example, in a range of about 1 wt% to about 10 wt% with respect to the total weight of the cathode active material layer 12. The binder may not be provided.

### Cathode layer: other additives

The cathode active material layer 12 may further include, for example, additives such as a filler, a coating agent, a dispersant, an ion-conductive adjuvant, and/or the like, in addition to the cathode active material, the solid electrolyte, the binder, and the conductive material as described previously.

As the filler, the coating agent, the dispersant, the ion-conductive adjuvant, and/or the like that may be included in the cathode active material layer 12, suitable materials generally utilized in electrodes of the secondary battery 1 may be utilized.

### Cathode layer: cathode current collector

The cathode current collector 11 may be made of, for example, indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or any alloy thereof in the form of a plate, foil, and/or the like. The cathode current collector 11 may not be provided. The thickness of the cathode current collector 11 may be, for example, in a range of about 1 µm to about 100 µm, about 1 µm to about 50 µm, about 5 µm to about 25 µm, or about 10 µm to about 20 µm.

The cathode current collector 11 may include, for example, a base film and a metal layer on one or both (e.g., opposite) surfaces of the base film. The base film may include, for example, a polymer. The polymer may be, for example, a thermoplastic polymer. The polymer may include, for example, polyethylene terephthalate (PET), polyethylene (PE), polypropylene (PP), polybutylene terephthalate (PBT), polyimide (PI), or a combination thereof. The base film may be, for example, an insulator. By including an insulating thermoplastic polymer in the base film, the base film softens or liquefies if (e.g., when) a short circuit occurs, and thus a rapid increase in current may be suppressed or reduced by blocking battery operation. The metal layer may include, for example, indium (In), copper (Cu), magnesium (Mg), stainless steel, titanium (Ti), iron (Fe), cobalt (Co), nickel (Ni), zinc (Zn), aluminum (Al), germanium (Ge), or an alloy thereof. The metal layer may act as an electrochemical fuse and break in case of overcurrent to perform a short-circuit prevention function. The limit current and the maximum current may be adjusted by adjusting the thickness of the metal layer. The metal layer may be plated or deposited on the base film. If (e.g., when) the thickness of the metal layer is reduced, then the limit current and/or the maximum current of the cathode current collector 11 may be reduced, and thus, the stability of the lithium battery in the event of short circuit may be enhanced. A lead tab may be added on the metal layer for connection to the outside. The lead tab may be welded to the metal layer or a metal layer/base film stack by ultrasonic welding, laser welding, spot welding, and/or the like. The metal layer may be electrically connected to the lead tab while the base film and/or the metal layer is melted during welding. To make welding between the metal layer and the lead tab more rigid, a metal chip may be added between the metal layer and the lead tab. The metal chip may be foil of the same material as a metal of the metal layer. The metal chip may be, for example, metal foil or metal mesh. The metal chip may be, for example, aluminum foil, copper foil, or SUS foil. The lead tab may be welded to a metal chip/metal layer stack or a metal chip/metal layer/base film stack by welding to the lead tab after the metal chip is disposed on the metal layer. The metal layer or the metal layer/metal chip stack may be electrically connected to the lead tab while the base film, the metal layer, and/or the metal chip are melted during welding. A metal chip and/or a lead tab may be added on a portion of the metal layer. The base film may have a thickness of, for example, about 1 µm to about 50 µm, about 1.5 µm to about 50 µm, about 1.5 µm to about 40 µm, or about 1 µm to about 30 µm. If (e.g., when) the thickness of the base film is within the previously described range, then the weight of an electrode assembly may be more effectively reduced. The base film may have a melting point of, for example, about 100 °C to about 300 °C, about 100 °C to about 250 °C, or about 100 °C to about 200 °C. If (e.g., when) the melting point of the base film is within these ranges, then the base film may be melted and easily coupled to the lead tab in the lead tab welding process. Surface treatment such as corona treatment may be performed on the base film to improve the adhesion between the base film and the metal layer. The metal layer may have a thickness of, for example, about 0.01 µm to about 3 µm, about 0.1 µm to about 3 µm, about 0.1 µm to about 2 µm, or about 0.1 µm to about 1 µm. If (e.g., when) the thickness of the metal layer is within these ranges, then the stability of an electrode assembly may be secured while maintaining conductivity. The metal chip may have a thickness of, for example, about 2 µm to about 10 µm, about 2 µm to about 7 µm, or about 4 µm to about 6 µm. If (e.g., when) the thickness of the metal chip is within these ranges, then connection between the metal layer and the lead tab may be more facilitated. If (e.g., when) the cathode current collector 11 has this structure, then the weight of the cathode layer may be reduced, resulting in improved energy density of the secondary battery.

### Anode layer

### Anode layer: anode active material

Referring to FIGS. 1 to 4, the anode layer 20 includes the first anode active material layer 22. The first negative active material layer 22 may include, for example, an anode active material and a binder.

The anode active material included in the first anode active material layer 22 may be, for example, an anode material capable of forming an alloy or compound with lithium.

The anode active material included in the first anode active material layer 22 may have, for example, a particle form. The average particle diameter of the anode active material in particle form may be, for example, 4 µm or less, 3 µm or less, 2 µm or less, 1 µm or less, 500 nm or less, 300 nm or less, or 100 nm or less. The average particle diameter of the anode active material in particle form may be, for example, in a range of about 10 nm to about 4 µm, about 10 nm to about 3 µm, about 10 nm to about 2 µm, about 10 nm to about 1 µm, about 10 nm to about 500 nm, about 10 nm to about 300 nm, or about 10 nm to about 100 nm. If (e.g., when) the average particle diameter of the anode active material is within these ranges, then reversible absorption and/or desorption of lithium during charging and discharging may be more facilitated. The average particle diameter of the anode active material may be, for example, a median diameter (D50) measured by utilizing a laser particle size distribution analyzer.

The anode active material included in the first anode active material layer 22 may include, for example, at least one selected from among a carbon-based anode active material and/or a metal or metalloid anode active material.

The carbon-based anode active material may include, for example, amorphous carbon, crystalline carbon, porous carbon, or a combination thereof.

The carbon-based anode active material may be, for example, amorphous carbon. The amorphous carbon may be, for example, carbon black (CB), acetylene black (AB), furnace black (FB), Ketjen black (KB), or graphene. However, the present disclosure is not limited thereto and any carbon that is classified as amorphous carbon in the art is possible. Amorphous carbon is carbon that does not have crystallinity or has very low crystallinity and is distinguished from crystalline carbon or graphitic carbon.

The carbon-based anode active material may be, for example, porous carbon. The pore volume of the porous carbon may be, for example, in a range of about 0.1 cc/g to about 10.0 cc/g, about 0.5 cc/g to about 5 cc/g, or about 0.1 cc/g to about 1 cc/g. The average pore diameter of the porous carbon may be, for example, in a range of about 1 nm to about 50 nm, about 1 nm to about 30 nm, or about 1 nm to about 10 nm. The BET specific surface area of the porous carbon may be, for example, in a range of about 100 m²/g to about 3,000 m²/g.

The metal or metalloid anode active material may include at least one selected from among gold (Au), platinum (Pt), palladium (Pd), silicon (Si), silver (Ag), aluminum (Al), bismuth (Bi), tin (Sn), and/or zinc (Zn). However, the present disclosure is not necessarily limited thereto and it may be possible to utilize any anode active material utilized in the art as a metal anode active material or metalloid anode active material that forms an alloy or compound with lithium. For example, nickel (Ni) does not form an alloy with lithium, and thus is not a metal anode active material.

The first anode active material layer 22 may include one of these anode active materials, or a mixture of a plurality of different negative active materials. For example, the first anode active material layer 22 may include only amorphous carbon, or may include at least one selected from among gold (Au), platinum (Pt), palladium (Pd), silicon (Si), silver (Ag), aluminum (Al), bismuth (Bi), tin (Sn), and/or zinc (Zn). In other embodiments, the first anode active material layer 22 may include a mixture of amorphous carbon and at least one selected from among gold (Au), platinum (Pt), palladium (Pd), silicon (Si), silver (Ag), aluminum (Al), bismuth (Bi), tin (Sn), and/or zinc (Zn). The mixing ratio of the mixture of amorphous carbon and gold and/or the like may be, for example, in a range of about 99:1 to about 1:99, about 10:1 to about 1:2, about 5:1 to about 1:1, or about 4:1 to about 2:1. However, the present disclosure is not necessarily limited thereto and the mixing ratio is selected depending on the required characteristics of the secondary battery 1. If (e.g., when) the anode active material has these compositions, then the cycle characteristics of the secondary battery 1 may be further enhanced.

The anode active material included in the first anode active material layer 22 may include, for example, a mixture of primary particles formed of amorphous carbon and secondary particles formed of a metal or a metalloid. The metal or the metalloid may include, for example, gold (Au), platinum (Pt), palladium (Pd), silicon (Si), silver (Ag), aluminum (Al), bismuth (Bi), tin (Sn), and zinc (Zn). In other embodiments, the metalloid may be a semiconductor. The amount of the second particles may be in a range of about 1 wt% to about 99 wt%, about 1 wt% to about 60 wt%, about 8 wt% to about 60 wt%, about 10 wt% to about 50 wt%, about 15 wt% to about 40 wt%, or about 20 wt% to about 30 wt%, with respect to the total weight of the mixture. If (e.g., when) the amount of the secondary particles is within these ranges, for example, then the cycle characteristics of the secondary battery 1 may be further enhanced.

In other embodiments, the first anode active material layer 22 may include a composite anode active material. The composite anode active material may include, for example, a carbon-based support and a metal-based anode active material supported on the carbon-based support. if (e.g., when) the composite anode active material has such a structure, then localization of the metal-based anode active material in the first anode active material layer may be prevented or reduced and substantially uniform distribution thereof may be obtained. As a result, the cycle characteristics of the secondary battery 1 including the first anode active material layer 22 may be further enhanced.

The metal-based anode active material supported on the carbon-based support may include, for example, a metal, a metal oxide, a composite of a metal and a metal oxide, or a combination thereof. Non-limiting examples of the metal may include gold (Au), platinum (Pt), palladium (Pd), silicon (Si), silver (Ag), aluminum (Al), bismuth (Bi), tin (Sn), tellurium (Te), and zinc (Zn). Non-limiting examples of the metal oxide may include gold (Au) oxide, platinum (Pt) oxide, palladium (Pd) oxide, silicon (Si) oxide, silver (Ag) oxide, aluminum (Al) oxide, bismuth (Bi) oxide, tin (Sn) oxide, tellurium (Te) oxide, and zinc (Zn) oxide. The metal oxide may include, for example, AuₓO_{y} where0<x≤2 and 0<y≤3, PtₓO_{y} where 0<x≤1 and 0<y≤2, PdₓO_{y} where 0<x≤1 and 0<y≤1, SiₓO_{y} where 0<x≤1 and 0<y≤2, AgₓO_{y} where 0<x≤2 and 0<y≤1, AlₓO_{y} where 0<x≤2 and 0<y≤3, BiₓO_{y} where 0<x≤2 and 0<y≤3, SnₓO_{y} where 0<x≤1 and 0<y≤2, TeₓO_{y} where 0<x≤1 and 0<y≤3, ZnₓO_{y} where 0<x≤1 and 0<y≤1, or a combination thereof. The composite of a metal and a metal oxide may include, for example, a composite of Au and AuₓO_{y} where 0<x≤2 and 0<y≤3, a composite of Pt and PtₓO_{y} where 0<x≤1 and 0<y≤2, a composite of Pd and PdₓO_{y} where 0<x≤1 and 0<y≤1, a composite of Si and SiₓO_{y} where 0<x≤1 and 0<y≤2, a composite of Ag and AgₓO_{y} where 0<x≤2 and 0<y≤1, a composite of Al and AlₓO_{y} where 0<x≤2 and 0<y≤3, a composite of Bi and BiₓO_{y} where 0<x≤2 and 0<y≤3, a composite of Sn and SnₓO_{y} where 0<x≤1 and 0<y≤2, a composite of Te and TeₓO_{y} where 0<x≤1 and 0<y≤3, a composite of Zn and ZnₓO_{y} where 0<x≤1 and 0<y≤1, or a combination thereof.

The carbon-based support may be, for example, amorphous carbon. The amorphous carbon may be, for example, carbon black (CB), acetylene black (AB), furnace black (FB), Ketjen black (KB), graphene, activated carbon, carbon nanofibers (CNFs), or carbon nanotubes (CNTs). However, the present disclosure is not necessarily limited thereto and any carbon that is classified as amorphous carbon in the art is possible. Amorphous carbon is carbon that does not have crystallinity or has very low crystallinity and is distinguished from crystalline carbon or graphitic carbon. The carbon-based material, e.g., carbonaceous material, may be, for example, a carbon-based anode active material.

The composite anode active material may have, for example, a particle form. The particle diameter of the composite anode active material in particle form may be, for example, in a range of about 10 nm to about 4 µm, about 10 nm to about 1 µm, about 10 nm to about 500 nm, about 10 nm to about 200 nm, or about 10 nm to about 100 nm. If (e.g., when) the particle diameter of the composite anode active material is within these ranges, then reversible absorption and/or desorption of lithium during charging and discharging may be more facilitated. The metal-based anode active material supported on the support may have, for example, a particle form. The particle diameter of the metal-based anode active material may be, for example, in a range of about 1 nm to about 200 nm, about 1 nm to about 150 nm, about 5 nm to about 100 nm, or about 10 nm to about 50 nm. The carbon-based support may have, for example, a particle form. The particle diameter of the carbon-based support may be, for example, in a range of about 10 nm to about 2 µm, about 10 nm to about 1 µm, about 10 nm to about 500 nm, about 10 nm to about 200 nm, or about 10 nm to about 100 nm. If (e.g., when) the particle diameter of the carbon-based support is within these ranges, then the carbon-based support may be more uniformly arranged in the first anode active material layer. The carbon-based support may be, for example, nanoparticles having a particle diameter of 500 nm or less. The particle diameter of the composite anode active material, the particle diameter of the metal-based anode active material, and the particle diameter of the carbon-based support may be, for example, average particle diameters. The average particle diameter may be, for example, a median diameter (D50) measured by utilizing a laser particle size distribution analyzer. In other embodiments, the average particle diameter may be, for example, determined automatically by utilizing software from an electron microscope image, or may be determined manually by manual means.

### Anode layer: binder

The binder included in the first anode active material layer 22 may be, for example, styrene-butadiene rubber (SBR), polytetrafluoroethylene, polyvinylidene fluoride, polyethylene, a vinylidene fluoride/hexafluoropropylene copolymer, polyacrylonitrile, or polymethyl methacrylate. However, the present disclosure is not necessarily limited thereto and any binder utilized in the art is possible. The binder may be a binder alone or a plurality of different binders.

By including the binder in the first anode active material layer 22, the first anode active material layer 22 is stabilized on the anode current collector 21. In other embodiments, cracking of the first anode active material layer 22 may be suppressed or reduced despite a change in the volume and/or relative position of the first anode active material layer 22 during charging and discharging processes. For example, if (e.g., when) the first anode active material layer 22 does not include a binder, then the first anode active material layer 22 may be easily separated from the anode current collector 21. Due to separation of the first anode active material layer 22 from the anode current collector 21, an exposed portion of the anode current collector 21 may contact the electrolyte layer 30, and a possibility of the occurrence of a short circuit may then increase. The first anode active material layer 22 may be prepared by, for example, applying a slurry, in which materials constituting the first anode active material layer 22 are dispersed, onto the anode current collector 21 and drying the slurry. By including the binder in the first anode active material layer 22, the anode active material may be stably dispersed in the slurry. For example, in a case in which the slurry is applied onto the anode current collector 21 by screen printing, it may be possible to suppress or reduce clogging of a screen (for example, clogging by aggregates of the anode active material).

### Anode layer: other additives

The first anode active material layer 22 may further include, for example, additives utilized in existing secondary batteries, such as a filler, a coating agent, a dispersant, and an ion-conductive adjuvant.

### Anode layer: first anode active material layer

The initial charge capacity of the first anode active material layer may be, for example, 50% or less, 40% or less, 30% or less, 20% or less, or 10% or less of the initial charge capacity of the cathode active material layer 12. The initial charge capacity of the first anode active material layer 12 may be, for example, in a range of about 0.1 % to about 50 %, about 0.5 % to about 45 %, about 1 %to about 40 %, about 1 % to about 30 %, about 1 % to about 20 %, or about 5 % to about 10 %, of the initial charge capacity of the cathode active material layer 12.

A ratio B/A of an initial charge capacity B of the first anode active material layer 22 to an initial charge capacity A of the cathode active material layer 12 may be, for example, in a range of 0.005 to 0.5 or 0.005 to 0.45. The initial charge capacity of the cathode active material layer 12 may be determined by charging from a 1^{st} open circuit voltage to a maximum charging voltage (vs. Li/Li⁺). The initial charge capacity of the first anode active material layer 22 may be determined by charging from a 2^{nd} open circuit voltage to 0.01 V (vs. Li/Li⁺). The maximum charging voltage may be determined depending on the type or kind of cathode active material. The maximum charging voltage may be, for example, 1.5 V, 2.0 V, 2.5 V, 3.0 V, 3.5 V, 4.0 V, 4.2 V, or 4.3 V. For example, the maximum charging voltage of Li₂S or the Li₂S composite may be 2.5 V (vs. Li/Li⁺). For example, the maximum charging voltage of Li₂S or the Li₂S composite may be 3.0 V (vs. Li/Li⁺). The ratio B/A of the initial charge capacity B of the first anode active material layer 22 to the initial charge capacity A of the cathode active material layer 12 may be, for example, in a range of about 0.01 to about 0.45, about 0.01 to about 0.4, about 0.01 to about 0.3, about 0.01 to about 0.2, or about 0.05 to about 0.1. The initial charge capacity (mAh) of the cathode active material layer 12 may be obtained by multiplying the charge specific capacity (mAh/g) of a cathode active material by the mass (g) of the cathode active material in the cathode active material layer 12. If (e.g., when) one or more suitable types (kinds) of cathode active materials are utilized, then charge specific capacity x mass value may be calculated for each cathode active material, and the sum of these values is the initial charge capacity of the cathode active material layer 12. Also, the initial charge capacity of the first anode active material layer 22 may be calculated in substantially the same way. The initial charge capacity of the first anode active material layer 22 may be obtained by multiplying the charge specific capacity (mAh/g) of an anode active material by the mass of the anode active material in the first anode active material layer 22. If (e.g., when) one or more suitable types (kinds) of anode active materials are utilized, then charge specific capacity x mass value may be calculated for each anode active material, and the sum of these values is the initial charge capacity of the first anode active material layer 22. The charge specific capacity of each of the cathode active material and the anode active material may be measured by utilizing a solid half-cell utilizing lithium metal as a counter electrode. The initial charge capacity of each of the cathode active material layer 12 and the first anode active material layer 22 may be directly measured by utilizing a solid half-cell at a constant current density, for example, 0.1 mA/cm². For the cathode layer, the measurement may be performed from the 1^{st} open circuit voltage (OCV) to the maximum charging voltage, e.g., an operating voltage of 3.0 V (vs. Li/Li⁺). For the anode, the measurement may be performed from the 2^{nd} open circuit voltage (OCV) to, for example, an operating voltage of 0.01 V vs. lithium metal. For example, a solid half-cell having the cathode active material layer 12 may be charged at a constant current of 0.1 mA/cm² from the 1^{st} open circuit voltage to 3.0 V, and a solid half-cell having the first anode active material layer may be charged at a constant current of 0.1 mA/cm² from the 2^{nd} open circuit voltage to 0.01 V. The current density during charging at a constant current may be, for example, 0.2 mA/cm² or 0.5 mA/cm². The solid half-cell having the cathode active material layer 12 may be charged, for example, from the 1^{st} open circuit voltage to 2.5 V, 2.0 V, 3.5 V, or 4.0 V. The maximum charging voltage of the cathode active material layer 12 may be determined by the maximum voltage of a battery that satisfies the safety conditions in accordance with JISC8712:2015 of the Japanese Standards Association.

If (e.g., when) the initial charge capacity of the first anode active material layer 22 is too small, then the thickness of the first anode active material layer 22 becomes very thin, so that lithium dendrites formed between the first anode active material layer 22 and the anode current collector 21 during charging and discharging processes collapse the first anode active material layer 22, and thus, the cycle characteristics of the secondary battery 1 are hardly enhanced. If (e.g., when) the charging capacity of the first anode active material layer 22 is excessively increased, then the energy density of the secondary battery 1 may decrease and the internal resistance of the secondary battery 1 due to the first anode active material layer 22 may increase, making it difficult for the secondary battery 1 to have enhanced cycle characteristics.

The thickness of the first anode active material layer 22 may be, for example, 50% or less, 40% or less, 30% or less, 20% or less, 10% or less, or 5% or less of the thickness of the cathode active material layer 12. The thickness of the first anode active material layer 22 may be, for example, in a range of about 1 % to about 50 %, about 1 % to about 40 %, about 1 % to about 30 %, about 1 % to about 20 %, about 1 % to about 10 %, or about 1% to about 5 % of the thickness of the cathode active material layer 12. The thickness of the first anode active material layer 22 may be, for example, in a range of about 1 µm to about 20 µm, about 2 µm to about 15 µm, or about 3 µm to about 10 µm. If (e.g., when) the thickness of the first anode active material layer 22 is too thin, then lithium dendrites formed between the first anode active material layer 22 and the anode current collector 21 collapse the first anode active material layer 22, making it difficult for the secondary battery 1 to have enhanced cycle characteristics. If (e.g., when) the thickness of the first anode active material layer 22 increases excessively, then the energy density of the secondary battery 1 may decrease and the internal resistance of the secondary battery 1 due to the first anode active material layer 22 may increase, making it difficult for the secondary battery 1 to have enhanced cycle characteristics. If (e.g., when) the thickness of the first anode active material layer 22 decreases, for example, then the initial charge capacity of the first anode active material layer 22 may also decrease.

### Anode layer: second anode active material layer

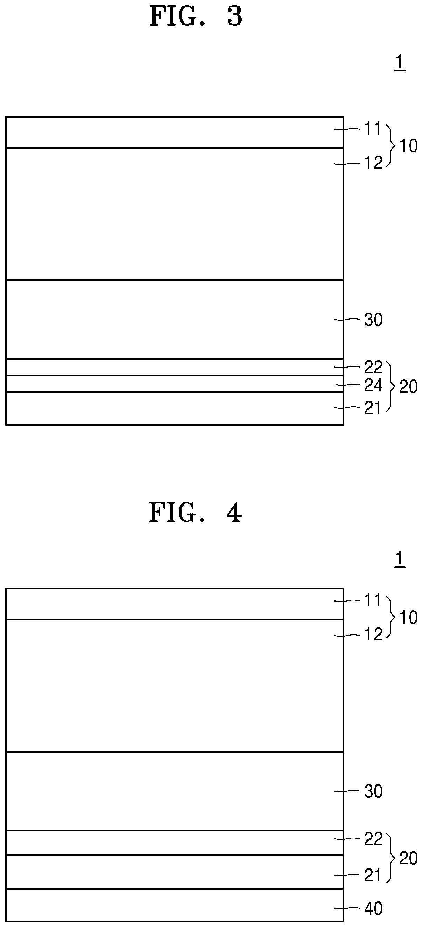

Referring to FIG. 3, the secondary battery 1 may further include, for example, a second anode active material layer 24 between the anode current collector 21 and the first anode active material layer 22, after charging. The second anode active material layer 24 may be a metal layer including lithium or a lithium alloy. The metal layer may include lithium or a lithium alloy. Therefore, the second anode active material layer 24 may act as, for example, a lithium reservoir because the second anode active material layer 24 is a lithium-containing metal layer. The lithium alloy may include, for example, a Li-Al alloy, a Li-Sn alloy, a Li-In alloy, a Li-Ag alloy, a Li-Au alloy, a Li-Zn alloy, a Li-Ge alloy, or a Li-Si alloy. However, the present disclosure is not limited thereto and any lithium alloy utilized in the art is possible. The second anode active material layer 24 may be formed of one of these alloys or lithium, or may be formed of several types (kinds) of alloys. The second anode active material layer 24 may be, for example, a plated layer. For example, the second anode active material layer 24 may be plated or deposited between the first anode active material layer 22 and the anode current collector 21 during the charging process of the secondary battery 1.

The thickness of the second anode active material layer 24 is not limited, but may be, for example, in a range of about 1 µm to about 500 µm, about 1 µm to about 200 µm, about 1 µm to about 150 µm, about 1 µm to about 100 µm, or about 1 µm to about 50 µm. If (e.g., when) the thickness of the second anode active material layer 24 is too thin, then it may be difficult for the second anode active material layer 24 to function as a lithium reservoir. If (e.g., when) the thickness of the second anode active material layer 24 is too thick, then the mass and volume of the secondary battery 1 may increase and the cycle characteristics of the secondary battery 1 may deteriorate.

In other embodiments, in the secondary battery 1, the second anode active material layer 24 may be, for example, disposed between the anode current collector 21 and the first anode active material layer 22, before assembly of the secondary battery 1. If (e.g., when) the second anode active material layer 24 is disposed between the anode current collector 21 and the first anode active material layer 22 before assembly of the secondary battery 1, then the second anode active material layer 24 acts as a lithium reservoir because the second anode active material layer 24 is a lithium-containing metal layer. For example, before the secondary battery 1 is assembled, lithium foil may be disposed between the anode current collector 21 and the first anode active material layer 22.

If (e.g., when) the secondary anode active material layer 24 is deposited by charging after assembly of the secondary battery 1, then the energy density of the secondary battery 1 may increase because the second anode active material layer 24 is not included during assembly of the secondary battery 1. The secondary battery 1 may be charged at a charging capacity that exceeds that of the first anode active material layer 22. The first anode active material layer 22 may be overcharged. At the beginning of charging, lithium may be absorbed into the first anode active material layer 22. The anode active material included in the first anode active material layer 22 may form an alloy or compound with lithium ions that have migrated from the cathode layer 10. If (e.g., when) charging is performed to be greater than the capacity of the first anode active material layer 22, for example, then lithium is deposited at a rear surface of the first anode active material layer 22, i.e., between the anode current collector 21 and the first anode active material layer 22, and a metal layer corresponding to the second anode active material layer 24 may be formed by the deposited lithium. The second anode active material layer 24 may be a metal layer mainly consisting of lithium (i.e., lithium metal). These results are obtained, for example, because the anode active material included in the first anode active material layer 22 includes a material that forms an alloy or compound with lithium. During discharge, lithium in the first anode active material layer 22 and the second anode active material layer 24, for example, the metal layer, is ionized and moves toward the cathode layer 10. Thus, it may be possible to utilize lithium as an anode active material in the secondary battery 1. In other embodiments, because the first anode active material layer 22 covers the second anode active material layer 24, the first anode active material layer 22 may serve as a protective layer for the second anode active material layer 24, for example, the metal layer, and at the same time, may serve to suppress or reduce the deposition growth of lithium dendrites. Therefore, the short circuit and capacity reduction of the secondary battery 1 may be suppressed or reduced, resulting in enhanced cycle characteristics of the secondary battery 1. In other embodiments, if (e.g., when) the second anode active material layer 24 is disposed by charging after assembly of the secondary battery 1, then the anode 20, i.e., the anode current collector 21, the first anode active material layer 22, and a region therebetween, may be a Li-free region that does not contain Li in an initial state or completely discharged state of the secondary battery 1.

### Anode layer: anode current collector

The anode current collector 21 may be made of a material that does not react with lithium, for example, a material that does not form both (e.g., simultaneously) an alloy and a compound with lithium. Examples of materials constituting the anode current collector 21 may include, but are not limited to, copper (Cu), stainless steel, titanium (Ti), iron (Fe), cobalt (Co), and nickel (Ni), and any electrode current collector utilized in the art is possible. The anode current collector 21 may be made of one of the previously described metals, an alloy of at least two of the metals, or a coating material. The anode current collector 21 may be, for example, in the form of a plate or foil.

Referring to FIG. 2, the secondary battery 1 may further include a thin film 23 containing an element capable of forming an alloy with lithium on one surface of the anode current collector 21. The thin film 23 may be disposed between the anode current collector 21 and the first anode active material layer 22. The thin film 23 may include, for example, an element capable of forming an alloy with lithium. Examples of elements capable of forming an alloy with lithium may include, but are not necessarily limited to, gold, silver, zinc, tin, indium, silicon, aluminum, and bismuth, and any element capable of forming an alloy with lithium in the art is possible. The thin film 23 may be formed of one of these metals or an alloy of several types (kinds) of metals. By disposing the thin film 23 on one surface of the anode current collector 21, for example, a deposition form of the second anode active material layer 4 deposited between the thin film 23 and the first anode active material layer 22 may become more smooth, and the cycle characteristics of the secondary battery 1 may be further enhanced.

The thickness of the thin film 23 may be, for example, in a range of about 1 nm to about 800 nm, about 10 nm to about 700 nm, about 50 nm to about 600 nm, or about 100 nm to about 500 nm. If (e.g., when) the thickness of the thin film 23 is less than 1 nm, then it may be difficult for the thin film 23 to properly function. If (e.g., when) the thickness of the thin film 23 is too thick, then the thin film 23 itself may absorb lithium, and thus, the amount of lithium deposited at the anode is reduced, and the energy density of a solid battery may be then reduced and the cycle characteristics of the secondary battery 1 may deteriorate. The thin film 23 may be disposed on the anode current collector 21 by, for example, vacuum deposition, sputtering, plating, and/or the like. However, the present disclosure is not necessarily limited to these methods and any method for forming the thin film 23 in the art is possible.

In one or more embodiments, the anode current collector 21 may include, for example, a base film and a metal layer disposed on one or both (e.g., opposite) surfaces of the base film (e.g., at least one surface of the base film). The base film may include, for example, a polymer. The polymer may be, for example, a thermoplastic polymer. The polymer may include, for example, polyethylene terephthalate (PET), polyethylene (PE), polypropylene (PP), polybutylene terephthalate (PBT), polyimide (PI), or a combination thereof. The polymer may be an insulating polymer. By including an insulating thermoplastic polymer in the base film, the base film softens or liquefies if (e.g., when) a short circuit occurs, and thus a rapid increase in current may be suppressed or reduced by blocking battery operation. The metal layer may include, for example, copper (Cu), stainless steel, titanium (Ti), iron (Fe), cobalt (Co), nickel (Ni), or an alloy thereof. The anode current collector 21 may further include a metal chip and/or a lead tab. More details on the base film, the metal layer, the metal chip, and the lead tab of the anode current collector 21 may be referred to those provided previously with regard to the cathode current collector 11. If (e.g., when) the anode current collector 21 has this structure, then the weight of the anode may be reduced, resulting in improved energy density of the anode and the lithium battery.

### Anode layer: first inactive member

Referring to FIG. 4, the secondary battery 1 may further include a first inactive member 40 disposed on another surface of the anode current collector 21. The first inactive member 40 may be, for example, a conductive flame-retardant inactive member.

The first inactive member 40 may include, for example, a matrix, a filler, and a conductive material. The matrix may include, for example, a substrate and a reinforcing material. The first inactive member 40 may further include a filler, a binder, and/or the like.

The matrix may include, for example, a fibrous substrate and a fibrous reinforcing material. By including the substrate in the matrix, the matrix may have elasticity. Thus, the matrix may effectively accommodate volume changes during charging and discharging of the secondary battery 1 and may be disposed in one or more suitable positions. The substrate included in the matrix may include, for example, a first fibrous material. The substrate includes the first fibrous material, and thus, the substrate may effectively accommodate volume changes in the secondary battery 1 that occur during charging and discharging processes of the secondary battery 1, and deformation in the first inactive member 40 due to the volume changes in the secondary battery 1 may be effectively suppressed or reduced. The first fibrous material may be, for example, a material having an aspect ratio of at least 5, at least 20, or at least 50. The first fibrous material may be, for example, a material having an aspect ratio of about 5 to about 1,000, about 20 to about 1,000, or about 50 to about 1,000. The first fibrous material may include, for example, at least one selected from among pulp fibers and/or polymer fibers. The strength of the matrix may be enhanced by including the reinforcing material in the matrix. Thus, the matrix may prevent or reduce excessive volume changes during charging and discharging of the secondary battery 1 and prevent or reduce deformation of the secondary battery. The reinforcing material included in the matrix may include, for example, a second fibrous material. By including the second fibrous material in the reinforcing material, the strength of the matrix may be more uniformly increased. The second fibrous material may be, for example, a material having an aspect ratio of at least 3, at least 5, or at least 10. The first fibrous material may be, for example, a material having an aspect ratio of about 3 to about 100, about 5 to about 100, or about 10 to about 100. The second fibrous material may be, for example, a flame-retardant material. In this regard, ignition due to thermal runaway that occurs during charging and discharging processes of the second battery 1 or occurs due to external shock may be effectively suppressed or reduced. The second fibrous material may be, for example, glass fiber, metal oxide fiber, ceramic fiber, and/or the like.

The first inactive member 40 may include a filler and a conductive material, in addition to the matrix.

The filler may be disposed inside the matrix, on a surface of the matrix, or on both (e.g., simultaneously) the inside and the surface thereof. The filler may be, for example, an inorganic material. The filler included in the conductive flame-retardant inactive member may be, for example, a moisture getter. The filler may absorb moisture at a temperature of, for example, less than 100 °C, thereby removing moisture remaining in the secondary battery 1, and thus, the deterioration of the secondary battery 1 may be prevented or reduced. In other embodiments, if (e.g., when) the temperature of the secondary battery (1) is raised to 150 °C or higher due to thermal runaway that occurs during charging and discharging processes of the secondary battery (1) or occurs due to external shock, then the filler releases the absorbed moisture, and thus, ignition of the secondary battery 1 may be effectively suppressed or reduced. The filler may be, for example, a flame retardant. For example, the filler may be a metal hydroxide having hygroscopic properties. Examples of the metal hydroxide included in the filler may include Mg(OH)₂, Fe(OH)₃, Sb(OH)₃, Sn(OH)₄, Tl(OH)₃, Zr(OH)₄, AI(OH), or a combination thereof. The amount of the filler included in the conductive flame-retardant inactive member may be, for example, in a range of about 10 parts by weight to about 80 parts by weight, about 20 parts by weight to about 80 parts by weight, about 30 parts by weight to about 80 parts by weight, about 40 parts by weight to about 80 parts by weight, about 50 parts by weight to about 80 parts by weight, about 60 parts by weight to about 80 parts by weight, or about 65 parts by weight to about 80 parts by weight, with respect to 100 parts by weight of the conductive flame-retardant inactive member.

Non-limiting examples of the conductive material may include graphite, carbon black, acetylene black, Ketjen black, Denka black, carbon fiber, carbon nanotubes (CNTs), graphene, metal fiber, and metal powder. The electronic conductivity at 25 °C of the first inactive member 40 may be, for example, at least 100 times, at least 1,000 times, or at least 10,000 times the electronic conductivity at 25 °C of the first inactive member 40.

The first inactive member 40 may further include, for example, a binder. The binder may include, for example, a curable polymer or a non-curable polymer. The curable polymer may be a polymer that gets cured by heat and/or pressure. For example, the curable polymer may be solid at room temperature. Examples of the flame-retardant inactive member may include a heat-press curable film and/or a cured product thereof. The heat-press curable film may be, for example, TSA-66 manufactured by Toray.

The first inactive member 40 may further include other materials, in addition to the previously described substrate, reinforcing material, filler, conductive material, and binder. For example, the conductive flame-retardant inactive member may further include at least one selected from among paper, an insulating polymer, an ion conductive polymer, an insulating inorganic material, an oxide-based solid electrolyte, and/or a sulfide-based solid electrolyte. The insulating polymer may be, for example, an olefin-based polymer such as polypropylene (PP) or polyethylene (PE).

The density of the substrate or reinforcing material included in the first inactive member 40 may be, for example, in a range of about 10 % to about 300 %, about 10 % to about 150 %, about 10 % to about 140 %, about 10 % to about 130 %, or about 10 % to about 120 % of the density of the cathode active material included in the cathode active material layer 12.

The first inactive member 40 may be a member that does not include an electrochemically active material, for example, an electrode active material. The electrode active material is a material capable of absorbing/desorbing lithium. The first inactive member 40 may be formed of any material utilized in the art that is not an electrode active material.

The amount of the conductive material included in the first inactive member 40 may be, for example, in a range of about 1 part by weight to about 30 parts by weight, about 1 part by weight to about 20 parts by weight, about 1 part by weight to about 15 parts by weight, about 1 part by weight to about 10 parts by weight, about 5 parts by weight to about 40 parts by weight, about 5 parts by weight to about 30 parts by weight, or about 5 parts by weight to about 35 parts by weight, with respect to 100 parts by weight of the first inactive member 40.

The elastic modulus (Young's modulus) of the first inactive member 40 may be, for example, smaller than that of the anode current collector 21. The elastic modulus (Young's modulus) of the first inactive member 40 may be, for example, 50% or less, 30% or less, 10% or less, or 5% or less of the elastic modulus of the anode current collector 21. The elastic modulus (Young's modulus) of the first inactive member 40 may be, for example, in a range of about 0.01 % to about 50 %, about 0.1 % to about 30 %, about 0.1 % to about 10 %, or about 1 % to about 5 % of the elastic modulus of the anode current collector 21. The elastic modulus of the first inactive member 40 may be, for example, 100 MPa or less, 50 MPa or less, 30 MPa or less, 10 MPa or less, or 5 MPa or less. The elastic modulus of the first inactive member 40 may be, for example, in a range of about 0.01 MPa to about 100 MPa, about 0.1 MPa to about 50 MPa, about 0.1 MPa to about 30 MPa, about 0.1 MPa to about 10 MPa, or about 1 MPa to about 5 MPa. The elastic modulus (Young's modulus) of the first inactive member 40 and the anode current collector 21 may be measured, for example, according to the ASTM D412 method.

First inactive members 40 have conductivity, and thus may function as the anode current collector 21. In other embodiments, the first inactive member 40 has a lower elastic modulus than the anode current collector 21, and thus, a volume change in the anode layer 20 during charging and discharging of the secondary battery 1 may be more effectively accommodated. Consequently, the first inactive member 40 may effectively relieve internal stress caused by a volume change in the secondary battery 1 during charging and discharging, and thus, the cycle characteristics of the secondary battery 1 may be enhanced.

For example, the thickness of the first inactive member 40 may be greater than the thickness of the first anode active material layer 22. If (e.g., when) the thickness of the first inactive member 40 is greater than the thickness of the first anode active material layer 22, then a change in the volume of the anode layer 20 during charging and discharging may be more effectively accommodated. The thickness of the first anode active material layer 22 may be, for example, 50% or less, 40% or less, 30% or less, 20% or less, or 10% or less of the thickness of the first inactive member 40. The thickness of the first anode active material layer 22 may be, for example, in a range of about 1 % to about 50 %, about 1 % to about 40 %, about 1 % to about 30 %, about 1 % to about 20 %, or about 1 % to about 10 of the thickness of the first inactive member 40. The thickness of the first inactive member 40 may be, for example, in a range of about 1 µm to about 300 µm, about 10 µm to about 300 µm, about 50 µm to about 300 µm, or about 100 µm to about 200 µm. If (e.g., when) the thickness of the first inactive member 40 is too thin, then it may be difficult to provide the intended effect, and if (e.g., when) the thickness of the first inactive member 40 is too thick, then the energy density of the secondary battery 1 may be reduced. The shape of the first inactive member 40 is not limited and may be selected depending on the shape of the secondary battery 1. For example, the first inactive member 40 may be in the form of a sheet, a rod, or a gasket. For example, the first inactive member 40 may be disposed on one or both (e.g., opposite) surfaces of one secondary battery 1 (e.g., at least one surface of the secondary battery). The first inactive member 40 may be disposed, for example, between a plurality of stacked secondary batteries 1. The first inactive member 40 may be disposed, for example, between respective ones of the plurality of stacked secondary batteries 1, on the uppermost surface thereof, and/or on the lowermost surface thereof.

The first inactive member 40 may have, for example, a single-layered structure. In other embodiments, the first inactive member 40 may have a multilayered structure. In the first inactive member 40 having a multilayered structure, respective layers may have different compositions. The first inactive member having a multilayered structure may have, for example, a two-layered structure, a three-layered structure, a four-layered structure, or a five-layered structure. The first inactive member 40 having a multilayered structure may include, for example, at least one adhesive layer and at least one support layer. For example, the adhesive layer may effectively absorb a change in the volume of the anode layer 20 that occurs during the charging and discharging processes of the secondary battery 1, and may provide adhesion between the at least one support layer and other layers to increase the film strength of the first inactive member 40. The support layer may provide support strength to the first inactive member 40, prevent or reduce uneven pressure applied to the secondary battery 1 during a pressurization process or charging and discharging processes, and prevent or reduce the secondary battery 1 from being deformed.

### Manufacture of secondary battery

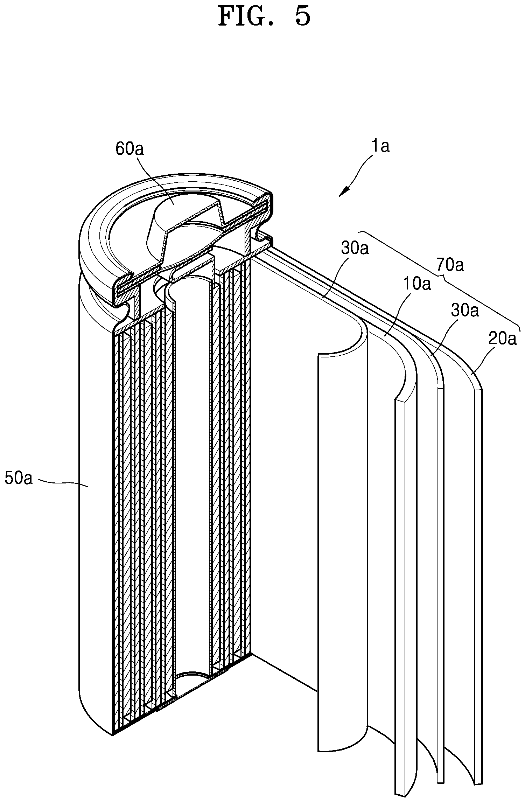

Referring to FIG. 5, a secondary battery 1a according to one or more embodiments includes a cathode layer 10a, an anode layer 20a, and a flexible electrolyte layer 30a. The cathode layer 10a, the anode layer 20a, and the electrolyte layer 30a may be wound or folded to form a battery structure 70a. The formed battery structure 70a may be accommodated in a battery case 50a. The battery case 50a may be sealed with a cap assembly 60a to thereby complete the manufacture of the secondary battery 1a. The battery case 50a is in a cylindrical form, but the present disclosure is not necessarily limited to this shape. For example, the battery case 50a may be in the form of a rectangle, a thin film, and/or the like. In other embodiments, the cathode layer 10a, the anode layer 20a, and the porous film 30a may be wound or folded to form a battery structure 70a. The formed battery structure 70a may be accommodated in a battery case 50a. A composition for forming a high-viscosity liquid electrolyte or polymer electrolyte is injected into the battery case 50a and sealed with a cap assembly 60a to thereby complete the manufacture of the secondary battery 1a. If (e.g., when) the composition for forming a polymer electrolyte is utilized, then heat treatment may be additionally performed. The secondary battery 1a may be, for example, a lithium battery.

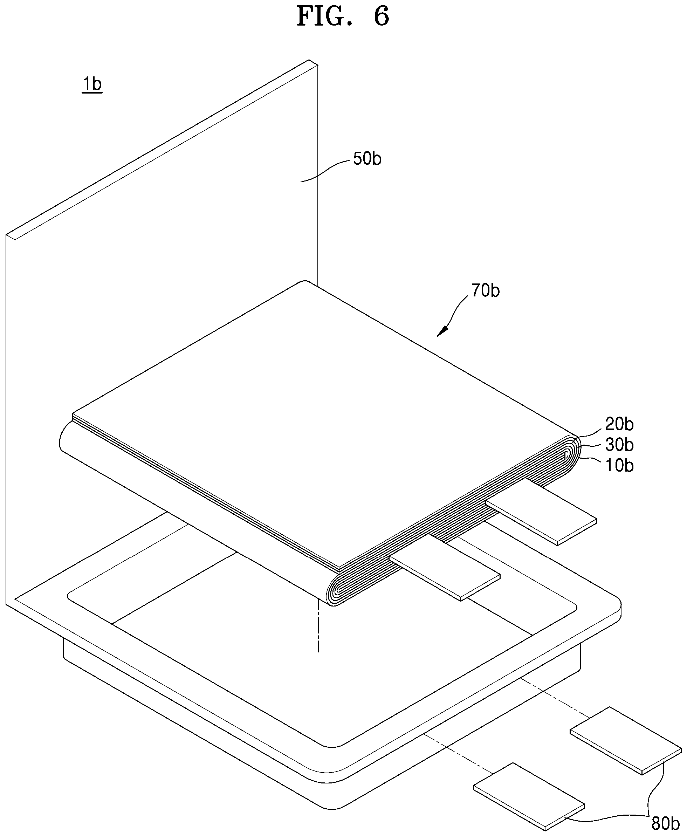

Referring to FIG. 6, a secondary battery 1b according to one or more embodiments includes a cathode layer 10b, an anode layer 20b, and a flexible electrolyte layer 30b. The electrolyte layer 30b may be disposed between the cathode layer 10b and the anode layer 20b, and the cathode layer 10b, the anode layer 20b, and the electrolyte layer 30b may be wound or folded to from a battery structure 70b. The formed battery structure 70b may be accommodated in a battery case 50b to thereby complete the manufacture of the secondary battery 1b. The secondary battery 1b may include electrode tabs 80b that serve as electrical paths for guiding current formed in the battery structure 70b. In some embodiments, a composition for forming a high-viscosity liquid electrolyte or polymer electrolyte may be injected into a battery case 50b and sealed with a cap assembly 60b to thereby complete the manufacture of the secondary battery 1b. If (e.g., when) the composition for forming a polymer electrolyte is utilized, then heat treatment may be additionally performed. The secondary battery 1b may be, for example, a lithium battery.

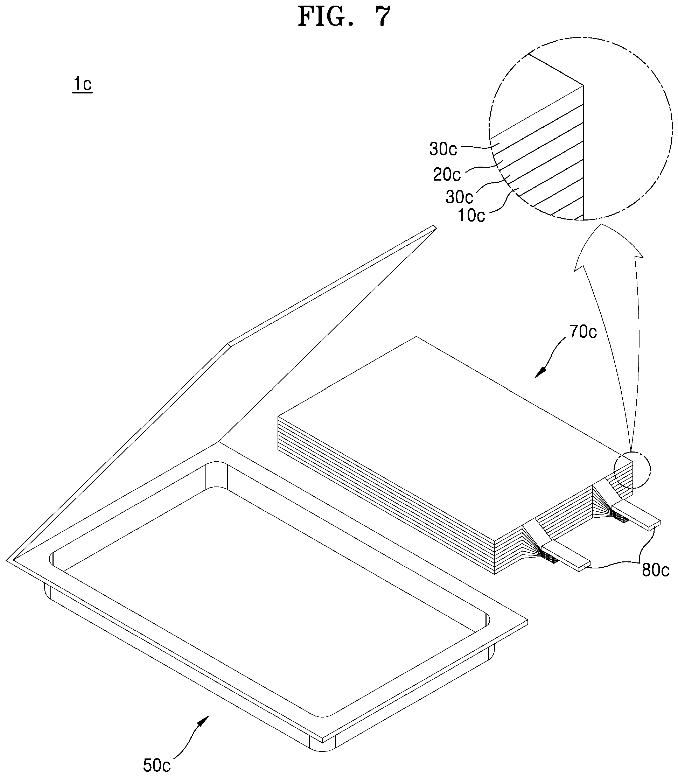

Referring to FIG. 7, a secondary battery 1c according to one or more embodiments includes a cathode layer 10c, an anode layer 20c, and a flexible electrolyte layer 30c. The electrolyte layer 30c may be disposed between the cathode layer 10c and the anode layer 20c to form a battery structure 70c. After the battery structure 70c is formed by stacking, the battery structure 70c may be accommodated in a battery case 50c to thereby complete the manufacture of the secondary battery 1c. The secondary battery 1c may include electrode tabs 80c that serve as electrical paths for guiding current formed in the battery structure 70c to the outside. The battery case 50c may be in a rectangular form, but the present disclosure is not necessarily limited to this shape. For example, the battery case 50c may be in a cylindrical form, a thin-film form, and/or the like. In some embodiments, a composition for forming a high-viscosity liquid electrolyte or polymer electrolyte may be injected into the battery case 50c and sealed with a cap assembly 60c to thereby complete the manufacture of the secondary battery 1c. If (e.g., when) the composition for forming a polymer electrolyte is utilized, then heat treatment may be additionally performed. The secondary battery 1c may be, for example, a lithium battery.

Pouch-type or kind lithium batteries correspond to the secondary batteries of FIGS. 5 to 7, except that pouches are utilized as the battery cases. A pouch-type or kind secondary battery may include at least one battery structure. A separator may be disposed between a cathode layer and an anode to form a battery structure. The battery structure may be stacked in a bi-cell structure, and then impregnated with an electrolyte solution, and accommodated in a pouch and sealed to thereby complete the manufacture of a pouch-type or kind lithium battery. For example, the previously described cathode, anode and separator may be simply stacked and accommodated in a pouch in the form of an electrode assembly, or may be wound or folded into a jelly roll-type or kind electrode assembly, and then accommodated in a pouch. Subsequently, an organic electrolyte solution may be injected into the pouch and sealed to thereby complete the manufacture of a secondary battery.

Secondary batteries have excellent or suitable lifespan characteristics and high-rate characteristics, and may be utilized, for example, in electric vehicles (EVs). For example, secondary batteries may be utilized in hybrid vehicles such as plug-in hybrid electric vehicles (PHEVs). In other embodiments, secondary batteries may be utilized in fields that require large amounts of power storage. For example, secondary batteries may be utilized in electric bicycles, power tools, and/or the like.

A plurality of secondary batteries may be stacked to form a battery module, and a plurality of battery modules may form a battery pack. These battery packs may be utilized in all devices that require high capacity and high output. For example, battery packs may be utilized in laptops, smartphones, electric vehicles, and/or the like. A battery module may include, for example, a plurality of batteries and a frame that holds the plurality of batteries. A battery pack may include, for example, a plurality of battery modules and a bus bar connecting the plurality of battery modules. The battery module and/or the battery pack may further include a cooling device. A plurality of battery packs may be controlled or selected by a battery management system. The battery management system may include a battery pack and a battery control device connected to the battery pack.

The present disclosure will be described in further detail with reference to the following examples and comparative examples. However, these examples are provided for illustrative purposes only and are not intended to limit the scope of the present disclosure.

### Example 1: Li₂S-LiI-CNF cathode layer/flexible electrolyte layer (separator + thermosetting polymer)/Ag-C anode layer, thermal curing after stack assembly Preparation of composite cathode active material

Li₂S and LiI were mixed in a weight ratio of 30:20. The mixture was mechanically milled by utilizing a ball mill to prepare a Li₂S-LiI composite. Milling conditions were as follows: at 25 °C and 600 rpm for 10 hours. The milling energy applied to a sample during milling was 20 G. Next, the Li₂S-LiI composite and carbon nanofibers (CNFs) were mixed in a weight ratio of 50:10. The mixture was mechanically milled by utilizing a ball mill to prepare a Li₂S-LiI-CNF composite. Milling conditions were as follows: at 25 °C and 600 rpm for 10 hours. The milling energy applied to a sample during milling was 20 G. The Li₂S-LiI-CNF composite was utilized as a composite cathode active material.

### Preparation of cathode layer

The previously described Li₂S-CNF composite was prepared as a cathode active material. Argyrodite-type or kind crystals Li₆PS₅Cl (D50=1.0 µm, crystalline) were prepared as a solid electrolyte. PTFE was prepared as a binder. The composite cathode active material, the solid electrolyte, and the binder were mixed in a weight ratio of 60:40:1.2 to prepare a cathode mix. The cathode mix may be obtained by dry mixing utilizing a ball mill.

The cathode mix was disposed on one side of a cathode current collector made of carbon-coated aluminum foil, followed by plate pressing at a pressure of 200 MPa for 10 minutes, to thereby complete the manufacture of a cathode layer. The thickness of the cathode layer was about 120 µm. The thickness of the cathode active material layer 12 was about 100 µm, and the thickness of the carbon-coated aluminum foil was about 20 µm. An initial charge capacity of the cathode layer was measured by the half-cell as described above. For Examples 1 to 3 and 7, a ratio (B/A) of initial charge capacity (B) of the first negative electrode active material layer to initial charge capacity (A) of the positive electrode active material layer was less than 30 % (i.e., less than 0.3) respectively. The initial charge capacity of the cathode active material layer determined by charging from a first open circuit voltage to a maximum charging voltage of 2.8 V vs. Li/Li+. Further, the initial charge capacity of the first anode active material layer determined by charging from a second open circuit voltage to 0.01 V vs. Li/Li+.

### Preparation of anode layer

SUS (stainless steel) foil having a thickness of 10 µm was prepared as an anode current collector. In other embodiments, carbon black (CB) having a primary particle diameter of about 30 nm and silver (Ag) particles having an average particle diameter of about 60 nm were prepared as anode active materials.

4 g of mixed powder in which the carbon black (CB) and the silver (Ag) particles were mixed in a weight ratio of 3:1 was placed in a container, and 4 g of an NMP solution including 7 wt% of a PVDF binder (# 9300 from Kureha) was added thereto to prepare a mixed solution. Subsequently, while NMP was added little by little to the mixed solution, the mixed solution was stirred to prepare a slurry. The prepared slurry was applied onto a SUS sheet by utilizing a bar coater and dried in air at 80 °C for 10 minutes. The obtained stack was vacuum-dried at 40 °C for 10 hours. The dried stack was cold-roll pressed at a pressure of 5 ton·f/cm² and a rate of 5 m/sec to planarize the surface of a first anode active material layer of the stack. An anode layer was fabricated by the previously described processes. The thickness of the first anode active material layer included in the anode layer was about 15 µm. An initial charge capacity of the anode was measured by the half-cell as described above.

### Thermosetting electrolyte composition

In a 20 L four-necked flask equipped with a stirrer, a thermometer, and a cooling tube, distilled water was added as a solvent, and 2-(N,N-dimethylamino)ethylacrylate, methyl acrylate, and acrylonitrile were added at a constant molar ratio, a small amount of potassium persulfate was added as an initiator. The reaction was carried out for 18 hours while the temperature of the reaction solution was stably maintained between 65 °C and 70 °C. Subsequently, after cooling to room temperature, the pH of the reaction solution was adjusted to 7 to 8 utilizing a 25% aqueous ammonia solution to prepare an acrylic polymer represented by Formula A, which is a poly(2-(N,N-dimethylamito)ethyl acrylate-co-methyl acrylate-co-acrylonitrile) copolymer. The molar ratio of 2-(N,N-dimethylamito)ethyl acrylate, methyl acrylate, and acrylonitrile was 20:15:65. The weight average molecular weight of the acrylic binder was about 60,000 Daltons. The weight average molecular weight of the acrylic polymer was measured by utilizing gel permeation chromatography (GPC) as a relative value for a polystyrene standard sample.

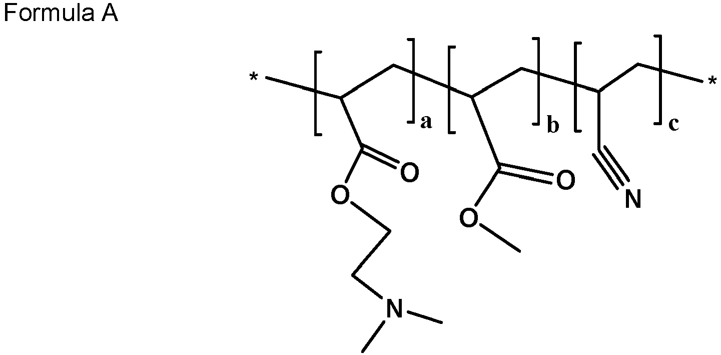

After 1.0 M LiPF6 and 1.0 M LiTFSI were dissolved in 94 g of a non-aqueous organic solvent in which ethylene carbonate (EC) and dimethyl carbonate (DMC) were mixed in a volume ratio of 15:85, 5.0 g of the acrylic polymer represented by Formula A was added, thereby completing the preparation of a thermosetting electrolyte composition.

### Manufacture of secondary battery

A polypropylene separator (celgard 3501) was prepared as a flexible porous separator. Then, the separator was impregnated with the thermosetting electrolyte composition.

Referring to FIG. 8, a separator was placed on a cathode layer so that a lithium metal layer was in contact with the separator, and a cathode layer was disposed on the separator to prepare a stack.

The prepared stack was plate pressed and heat-treated at 85 °C and a pressure of 0.5 MPa for 1 hour.

As the heat treatment was carried out concurrently (e.g., simultaneously) with the pressing of the stack, the thermosetting composition was thermally cured to form a polymer gel electrolyte. A polymer electrolyte layer was formed between the cathode layer and the anode layer.

The pressed stack was placed in a pouch and vacuum-sealed to thereby complete the manufacture of a secondary battery. Parts of a cathode current collector and an anode current collector were extended outside the sealed secondary battery and utilized as a cathode tab and an anode tab.

### Example 2: Li₂S-LiI-CNF cathode layer/flexible electrolyte layer (separator + thermosetting polymer)/Ag-C anode layer, thermal curing before stack assembly

A secondary battery was manufactured in substantially the same manner as in Example 1, except that an electrolyte layer in which a separator was impregnated with a polymer gel electrolyte was separately prepared, and then disposed on an anode layer, and a cathode layer was disposed on the electrolyte layer. The electrolyte layer was prepared by the following method.

A polypropylene separator (celgard 3501) was placed on a substrate as a flexible porous separator. A thermosetting electrolyte composition was applied onto the separator to impregnate the separator with the thermosetting electrolyte composition, and heat treatment was performed at 85 °C for 2 hours to prepare an electrolyte layer in which the separator was impregnated with the polymer gel electrolyte.

### Example 3: Li₂S-LiI-CNF cathode layer/flexible electrolyte layer (separator + high-viscosity liquid electrolyte)/Ag-C anode layer

A secondary battery was manufactured in substantially the same manner as in Example 1, except that a liquid electrolyte including an ionic liquid was applied onto a separator instead of the thermosetting electrolyte composition, and the temperature during pressing was changed to 25 °C.

The liquid electrolyte including an ionic liquid was prepared as follows.

### High-viscosity liquid electrolyte

After 1.0 M LiPF₆ and 1.0 M LiTFSI were dissolved in 65 g of a non-aqueous organic solvent in which ethylene carbonate (EC) and diethyl carbonate (DEC) were mixed in a volume ratio of 15:85, 35 g of an ionic liquid represented by Formula 2 was added, thereby completing the preparation of a liquid electrolyte.

As the ionic liquid, 1-methyl-1-propylpyrrolidinium bis(trifluoromethanesulfonyl)imide represented by Formula B was utilized.

The viscosity of the liquid electrolyte was 22.5 cps at 1 atm and 25 °C.

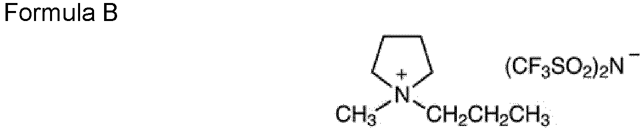

### Example 4: NCM cathode layer/flexible electrolyte layer (separator + thermosetting polymer)/Ag-C anode layer, thermal curing after stack assembly

A lithium secondary battery was manufactured in substantially the same manner as in Example 1, except that a LiNi_{0.8}Co_{0.15}Mn_{0.05}O₂ (NCM)-containing cathode layer coated with Li₂O-ZrO₂ (LZO), prepared as follows, was utilized as the cathode layer instead of the Li₂S-LiI-CNF composite-containing cathode layer.

### Preparation of cathode layer

LiNi_{0.8}Co_{0.15}Mn_{0.05}O₂ (NCM) coated with Li₂O-ZrO₂ (LZO) was prepared as a cathode active material. The LZO-coated cathode active material was prepared according to a method disclosed in Korean Patent Publication No. 10-2016-0064942. Argyrodite-type or kind crystals Li₆PS₅Cl (D50 = 0.5 µm, crystalline) were prepared as a solid electrolyte. A polytetrafluoroethylene (PTFE) binder was prepared as a binder. Carbon nanofibers (CNFs) were prepared as a conductive agent. The cathode active material, the solid electrolyte, the conductive agent, and the binder were mixed in a weight ratio of 84:11.5:3:1.5 together with a xylene solvent to prepare a slurry, the slurry was formed into a sheet form, and then vacuum-dried at 40 °C for 8 hours, thereby completing the manufacture of a cathode sheet. The manufactured cathode sheet was disposed on a carbon layer of a cathode current collector made of aluminum foil having the carbon layer formed on one surface thereof, followed by heated roll pressing at 85 °C, to thereby complete the preparation of a cathode layer. The total thickness of the cathode layer was about 120 µm. The thickness of a cathode active material layer was about 100 µm, and the thickness of the carbon-coated aluminum foil was about 25 µm. An initial charge capacity of the cathode layer was measured by the half-cell as described above. For Examples 4 to 6, a ratio (B/A) of initial charge capacity (B) of the first negative electrode active material layer to initial charge capacity (A) of the positive electrode active material layer was less than 30 % (i.e., less than 0.3) respectively. The initial charge capacity of the positive electrode active material layer was determined by charging from a first open circuit voltage to a maximum charging voltage of 4.25 V vs. Li/Li+. Further, the initial charge capacity of the first negative electrode active material layer was determined by charging from a second open circuit voltage to 0.01 V vs. Li/Li+.

### Example 5: NCM cathode layer/flexible electrolyte layer (separator + thermosetting polymer)/Ag-C anode layer, thermal curing before stack assembly

A secondary battery was manufactured in substantially the same manner as in Example 4, except that an electrolyte layer in which a separator was impregnated with a polymer gel electrolyte was separately prepared, and then disposed on an anode layer, and a cathode layer was disposed on the electrolyte layer.

The electrolyte layer was formed by the following method.

A polypropylene separator (celgard 3501) was placed on a substrate as a flexible porous separator. A thermosetting electrolyte composition was applied onto the separator to impregnate the separator with the thermosetting electrolyte composition, and heat treatment was performed at 85 °C for 2 hours to prepare an electrolyte layer in which the separator was impregnated with the polymer gel electrolyte.

### Example 6: NCM cathode layer/flexible electrolyte layer (separator + high-viscosity liquid electrolyte)/Ag-C anode layer

A lithium secondary battery was manufactured in substantially the same manner as in Example 3, except that the LiNi_{0.8}Co_{0.15}Mn_{0.05}O₂ (NCM)-containing cathode layer coated with Li₂O-ZrO₂ (LZO), prepared according to Example 3, was utilized as the cathode layer instead of the Li₂S-LiI-CNF composite-containing cathode layer.

### Example 7: Li₂S-LiI-CNF cathode layer/flexible electrolyte layer (separator + thermosetting polymer)/Ag-C anode layer/elastic sheet, thermal curing after stack assembly

A secondary battery was manufactured in substantially the same manner as in Example 1, except that a sheet-shaped conductive flame-retardant member having the same area and shape as the stack was further disposed on the outer surface of the anode current collector of the pressed stack before the pressed stack was placed in a pouch, and was vacuum-sealed.

A conductive flame-retardant inactive member sheet was fabricated by the following method. The conductive flame-retardant inactive member sheet may act as an elastic sheet.

A slurry, in which cellulose fiber, glass fiber, aluminum hydroxide (Al(OH)₃), an acrylic binder, a conductive material (Denka black), and a solvent were mixed, was formed into a sheet form, followed by drying, to manufacture a flame-retardant inactive member. The weight ratio of cellulose fiber, glass fiber, aluminum hydroxide (Al(OH)₃), the acrylic binder, and the conductive material was 20:8:50:2:20. The thickness of the conductive flame-retardant inactive member was 120 µm. The manufactured conductive flame-retardant inactive member was heat-treated in vacuum at 80 °C for 5 hours before being disposed on the anode current collector to remove moisture and/or the like from the conductive flame-retardant inactive member.

### Comparative Example 1: S-carbon (C) cathode layer/flexible electrolyte layer (separator + low-viscosity liquid electrolyte}/Li-metal anode layer, utilizing low-viscosity liquid electrolyte

### Preparation of composite cathode active material

Sulfur (S) and a carbon-based material were mixed in a weight ratio of 70:30, and then heat-treated at 160 °C to prepare a sulfur-carbon composite. The carbon-based material was carbon nanotubes (CNTs) having a specific surface area of 300 m²/g and a particle diameter of 30 µm.

### Preparation of cathode layer

The sulfur-carbon composite, a conductive material, and a binder were mixed in a weight ratio of 90:5:5, and then dissolved in water to prepare a slurry having a solid content (e.g., amount) of 25 wt%. The slurry was bar-coated onto a carbon-coated aluminum foil current collector, followed by drying at 50 °C for 2 hours, to prepare a cathode layer. Vapor grown carbon fiber (VGCF) was utilized as the conductive material, and polyvinylidene fluoride (PVDF) was utilized as the binder. The thickness of the cathode layer was about 120 µm. The thickness of the cathode active material layer was about 100 µm, and the thickness of the carbon-coated aluminum foil was about 20 µm.

### Preparation of anode layer

20 µm-thick lithium metal foil as an anode active material layer was disposed on 10 µm-thick SUS foil as an anode current collector to prepare an anode layer.

### Preparation of low-viscosity liquid electrolyte

1.0 M LiPF₆ was dissolved in 100 g of a non-aqueous organic solvent in which ethylene carbonate (EC) and ethylmethyl carbonate (DEC) were mixed in a volume ratio of 30:70, to prepare a liquid electrolyte. The viscosity of the liquid electrolyte was less than 5 cps at 1 atm and 25 °C.

### Manufacture of secondary battery

A polypropylene separator (celgard 3501) was prepared as a flexible porous separator.

A separator was placed on an anode layer so that a lithium metal layer was in contact with the separator, and a cathode layer was disposed on the separator to prepare a stack.

The prepared stack was plate pressed at 85 °C and a pressure of 0.5 MPa for 1 hour.

The pressed stack was placed in a pouch, and a low-viscosity liquid electrolyte was injected thereinto, followed by sealing in vacuum. Parts of a cathode current collector and an anode current collector were extended outside the sealed secondary battery and utilized as a cathode layer tab and an anode layer tab.

### Comparative Example 2: Li₂S-LiI-CNT cathode layer/solid electrolyte layer (sulfide-based solid electrolyte)/Li-metal anode layer, inorganic solid electrolyte layer

### Preparation of composite cathode active material

Li₂S, Lil, and carbon nanotubes (CNTs) were mixed in a weight ratio of 70:20:10. The mixture was mechanically milled by utilizing a ball mill to prepare a Li₂S-Lil-CNF composite. Milling conditions were as follows: at 25 °C and 300 rpm for 12 hours.

The Li₂S-LiI-CNT composite was utilized as a composite cathode active material.

### Preparation of cathode layer

A cathode layer was prepared in substantially the same manner as in Example 1, except that the Li₂S-LiI-CNT composite was utilized.

### Preparation of anode layer

20 µm-thick lithium metal foil as an anode active material layer was disposed on 10 µm-thick SUS foil as an anode current collector to prepare an anode layer.

### Preparation of solid electrolyte layer

A mixture was prepared by adding, to argyrodite-type or kind crystals Li₆PS₅Cl as a solid electrolyte (D₅₀=3.0 µm, crystalline), an acrylic binder in an amount of 1.5 parts by weight with respect to 98.5 parts by weight of the solid electrolyte. Octyl acetate was added to the prepared mixture and stirred to prepare a slurry. The prepared slurry was applied utilizing a bar coater onto 15 µm-thick non-woven fabric placed on a 75 µm-thick PET substrate, and dried in air at 80 °C for 10 minutes to prepare a stack. The prepared stack was vacuum-dried at 80 °C for 2 hours to prepare a solid electrolyte layer.

### Manufacture of secondary battery

A solid electrolyte layer was disposed on an anode layer so that a lithium metal layer was in contact with the solid electrolyte layer, and a cathode layer was disposed on the solid electrolyte layer to prepare a stack.

The prepared stack was plate pressed at 85 °C and a pressure of 500 MPa for 30 minutes.

The pressed stack was placed in a pouch and vacuum-sealed to thereby complete the manufacture of a secondary battery. Parts of a cathode current collector and an anode current collector were extended outside the sealed secondary battery and utilized as a cathode tab and an anode tab.

### Comparative Example 3: Li₂S-LiI-CNF cathode layer/flexible electrolyte layer (separator + thermosetting polymer)/Cu current collector, thermal curing after stack assembly, no anode active material layer utilized

A secondary battery was manufactured in substantially the same manner as in Example 1, except that the first anode active material layer including carbon black (CB) and silver (Ag) particles was omitted. The secondary battery had a structure in which the anode current collector was directly disposed on the electrolyte layer.

### Comparative Example 4: NCM cathode layer/solid electrolyte layer (sulfide-based solid electrolyte)/Li-metal anode layer, inorganic solid electrolyte layer

A lithium secondary battery was manufactured in substantially the same manner as in Comparative Example 2, except that the LiNi_{0.8}Co_{0.15}Mn_{0.05}O₂ (NCM)-containing cathode layer coated with Li₂O-ZrO₂ (LZO), prepared according to Example 4, was utilized as the cathode layer instead of the Li₂S-LiI-CNF composite-containing cathode layer.

### Evaluation Example 1: Evaluation of lifespan characteristics

The charge/discharge characteristics of the secondary batteries manufactured according to Examples 1 to 7, Comparative Examples 1 to 3, and Reference Example 1 were evaluated by the following charge/discharge test. The charge/discharge test was performed by placing each solid secondary battery in a thermostat at 45 °C.

In the 1^{st} cycle, each lithium battery was charged at a constant current of 0.05 C rate and 45 °C until the voltage reached 2.7 V (vs. Li). Subsequently, each lithium battery was discharged at a constant current of 0.05 C rate until the voltage reached 1.0 V (vs. Li).

Subsequently, each lithium battery was charged at a constant current of 0.1 C rate and 45°C until the voltage reached 2.7 V (vs. Li). Subsequently, each lithium battery was discharged at a constant current of 0.1 C rate until the voltage reached 1.0 V (vs. Li), and this cycle of charging and discharging was repeated. The discharge capacity at the 1^{st} cycle was denoted as the standard capacity.

The charge/discharge characteristics of the secondary batteries manufactured according to Examples 4 to 6 were evaluated by the following charge/discharge test. The charge/discharge test was performed by placing each lithium battery in a thermostat at 45 °C.

In the 1^{st} cycle, each lithium battery was charged at a current of 0.05 C rate and 45 °C until the voltage reached 4.2 V (vs. Li). Subsequently, each lithium battery was discharged at a constant current of 0.05 C rate until the voltage reached 2.5 V (vs. Li).

Subsequently, each lithium battery was charged at a constant current of 0.1 C rate and 45 °C until the voltage reached 4.2 V (vs. Li). Subsequently, each lithium battery was discharged at a constant current of 0.1 C rate until the voltage reached 1.0 V (vs. Li), and this cycle of charging and discharging was repeated.

The discharge capacity at the 1^{st} cycle was denoted as the standard capacity.

After the 2^{nd} cycle, charging and discharging were performed up to 150 cycles under the same conditions as the 1^{st} cycle. The measurement results are shown in Table 1.

The number of cycles refers to the number of cycles required for the discharge capacity to decrease to 80% of the standard capacity after the 2^{nd} cycle. A greater number of cycles indicates excellent or suitable lifespan characteristics.

**Table 1**

| | Number of cycles [times] |
|---|---|
| Example 1 (Li₂S-LiI-CNF cathode active material, GPE + porous separator, Ag-C anode active material, thermal curing after laminate assembly) | 510 |
| Example 2 (same as Example 1, except for thermal curing before stack assembly) | 320 |
| Example 3 (Li₂S-LiI-CNF cathode active material, high-viscosity electrolyte + porous separator, Ag-C anode active material) | 408 |
| Example 4 (NCM cathode active material, GPE + porous separator, Ag-C anode active material, thermal curing after stack assembly) | 720 |
| Example 5 (same as Example 4, except for thermal curing before stack assembly) | 505 |
| Example 6 (NCM cathode active material, high-viscosity electrolyte solution + porous separator, Ag-C anode active material) | 601 |
| Example 7 (Adding elastic sheet to outside of anode) (Example 1 + Anode elastic sheet) | 430 |
| Comparative Example 1 (S-carbon cathode active material, low-viscosity electrolyte solution + porous separator, Li metal anode active material) | 8 |
| Comparative Example 2 (Li₂S-LiI-CNT cathode active material, sulfide-based solid electrolyte layer, Li-metal anode active material) | 32 |
| Comparative Example 3 (Direct contact between electrolyte layer and Cu anode current collector) | 5 |
| Comparative Example 4 (NCM cathode active material, sulfide-based solid electrolyte layer, Li-metal anode active material) | 102 |

As shown in Table 1, the lifespan characteristics of the secondary batteries of Examples 1 to 7 were enhanced compared to those of the secondary batteries of Comparative Examples 1 to 3.

Each of the secondary batteries of Examples 1 to 7 included a flexible electrolyte, and thus, the interfacial resistance between the cathode layer and/or the anode layer and the electrolyte layer was reduced, and changes in the volumes of the cathode layer and the anode layer during charging and discharging processes were effectively accommodated, resulting in enhanced lifespan characteristics.

In the secondary battery of Comparative Example 1, polysulfide generated from sulfur (S) during charging and discharging processes was dissolved in the liquid electrolyte, and thus, electrode capacity was reduced and the dissolved polysulfide caused side reactions with the anode layer, resulting in deteriorated lifespan characteristics.

In the secondary battery of Comparative Example 2, defects such as cracks occurred in the solid electrolyte layer during the pressing process and charging and discharging processes of the secondary battery, and a short circuit and/or the like occurred due to the growth of lithium dendrites through these defects. As a result, the lifespan characteristics of the secondary battery deteriorated.

In the secondary battery of Comparative Example 3, the polymer electrolyte layer was in direct contact with the anode current collector, and thus, the formation of dendrites, the generation of isolated lithium metal, and/or the like occurred in the process of deposition and dissolution of lithium metal on the surface of the anode current collector during charging and discharging of the secondary battery, resulting in deteriorated lifespan characteristics of the secondary battery.

### Evaluation Example 2: Evaluation of high-rate characteristics

After the lifespan evaluation in Evaluation Example 1, the high-rate characteristics of the secondary batteries manufactured according to Examples 1 to 7 and Comparative Examples 1 to 4 were evaluated by the following charge/discharge test. The charge/discharge test was performed by placing each secondary battery in a thermostat at 45 °C.

Each lithium battery was charged at a constant current of 0.1 C rate and 45°C until the voltage reached 2.7 V (vs. Li). Subsequently, each lithium battery was discharged at a constant current of 0.1 C rate until the voltage reached 1.0 V (vs. Li) (1^{st} cycle).

Each lithium secondary having undergone the 1^{st} cycle was charged at a current of 0.1 C rate at 45 °C until the voltage reached 2.7 V (vs. Li). Subsequently, each lithium battery was discharged at a constant current of 0.2 C rate until the voltage reached 1.0 V (vs. Li) (2^{nd} cycle).

Each lithium secondary having undergone the 2^{nd} cycle was charged at a current of 0.12 C rate and 45 °C until the voltage reached 2.7 V (vs. Li). Subsequently, each lithium battery was discharged at a constant current of 0.5 C rate until the voltage reached 1.0 V (vs. Li) (3^{rd} cycle).

Each lithium secondary having undergone the 3^{rd} cycle was charged at a current of 0.1 C rate at 45 °C until the voltage reached 2.7 V (vs. Li). Subsequently, each lithium battery was discharged at a constant current of 1.0 C rate until the voltage reached 1.0 V (vs. Li) (4^{th} cycle).

After the lifespan evaluation in Evaluation Example 1, each of the lithium batteries manufactured according to Examples 4 to 6 and Comparative Example 4 was charged at a current of 0.1 C rate and 45 °C until the voltage reached 2.5 V (vs. Li). Subsequently, each lithium battery was discharged at a constant current of 0.1 C rate until the voltage reached 2.5 V (vs. Li) (1^{st} cycle).

Each lithium secondary having undergone the 1^{st} cycle was charged at a current of 0.1 C rate and 45 °C until the voltage reached 2.7 V (vs. Li). Subsequently, each lithium battery was discharged at a constant current of 0.2 C rate until the voltage reached 2.5 V (vs. Li) (2^{nd} cycle).

Each lithium secondary having undergone the 2^{nd} cycle was charged at a current of 0.1 C rate at 45 °C until the voltage reached 2.5 V (vs. Li). Subsequently, each lithium battery was discharged at a constant current of 0.5 C rate until the voltage reached 2.5 V (vs. Li) (3^{rd} cycle).

Each lithium battery having undergone the 3^{rd} cycle was charged at a current of 0.1 C rate and 45 °C until the voltage reached 2.5 V (vs. Li). Subsequently, each lithium battery was discharged at a constant current of 1.0 C rate until the voltage reached 2.5 V (vs. Li) (4^{th} cycle).

In all the charge/discharge cycles, a rest period of 10 minutes was set after one charging/discharging cycle. Parts of the experimental results of charging/discharging at room temperature are shown in Table 2. The high-rate characteristics are defined by Equation 1. High-rate characteristics [%] = [Discharge capacity in the 4th cycle (1.0 C) / Discharge capacity in the 1st cycle (0.1 C)] × 100

**Table 2**

| | High-rate characteristics (1 C/0.1 C) [%] |
|---|---|
| Example 1 (Li₂S-LiI-CNF cathode active material, GPE + porous separator, Ag-C anode active material, thermal curing after laminate assembly) | 87.5 |
| Example 2 (same as Example 1, except for thermal curing before stack assembly) | 78.1 |
| Example 3 (Li₂S-LiI-CNF cathode active material, high-viscosity electrolyte + porous separator, Ag-C anode active material) | 83.2 |
| Example 4 (NCM cathode active material, GPE + porous separator, Ag-C anode active material, thermal curing after stack assembly) | 92.2 |
| Example 5 (same as Example 4, except for thermal curing before stack assembly) | 87.2 |
| Example 6 (NCM cathode active material, high-viscosity electrolyte solution + porous separator, Ag-C anode active material) | 89.9 |
| Example 7 (Adding elastic sheet to outside of anode) (Example 1 + Anode elastic sheet) | 85.5 |
| Comparative Example 1 (S-carbon cathode active material, low-viscosity electrolyte solution + porous separator, Li metal anode active material) | 8.1 |
| Comparative Example 2 (Li₂S-LiI-CNT cathode active material, sulfide-based solid electrolyte layer, Li-metal anode active material) | 16.5 |
| Comparative Example 3 (Direct contact between electrolyte layer and Cu anode current collector) | 25.0 |
| Comparative Example 4 (NCM cathode active material, sulfide-based solid electrolyte layer, Li-metal anode active material) | 56.2 |

As shown in Table 2, the secondary batteries of Examples 1 to 3 and Example 7 including sulfide-based cathode active materials had improved high-rate characteristics compared to the secondary batteries of Comparative Examples 1 to 3 not including sulfur-based or sulfide-based cathode active materials.

In other embodiments, the secondary batteries of Examples 4 to 6 including oxide-based cathode active materials had improved high-rate characteristics, compared to the secondary battery of Comparative Example 4 including an oxide-based cathode active material.

According to the one or more embodiments, by disposing a flexible electrolyte layer between a cathode layer and an anode layer, the interfacial resistance between the cathode layer and/or the anode layer and the electrolyte layer may be reduced, cracks and/or the like in a solid electrolyte layer during charging and discharging processes may be suppressed or reduced, and thus, a secondary battery having enhanced cycle characteristics may be provided.

The electronic device, vehicle, and/or the battery, e.g., a battery controller, and/or any other relevant devices or components according to embodiments of the present disclosure described herein may be implemented utilizing any suitable hardware, firmware (*e*.*g*., an application-specific integrated circuit), software, or a combination of software, firmware, and hardware. For example, the various components of the device may be formed on one integrated circuit (IC) chip or on separate IC chips. Further, the various components of the device may be implemented on a flexible printed circuit film, a tape carrier package (TCP), a printed circuit board (PCB), or formed on one substrate. Further, the various components of the device may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random-access memory (RAM). The computer program instructions may also be stored in other non-transitory computer readable media such as, for example, a CD-ROM, flash drive, or the like. Also, a person of skill in the art should recognize that the functionality of various computing devices may be combined or integrated into a single computing device, or the functionality of a particular computing device may be distributed across one or more other computing devices without departing from the scope of the embodiments of the present disclosure.

It should be understood that embodiments described herein should be considered in a descriptive sense only and not for purposes of limitation. Descriptions of features or aspects within each embodiment should typically be considered as available for other similar features or aspects in other embodiments. While one or more embodiments have been described with reference to the drawings, it will be understood by those of ordinary skill in the art that one or more suitable changes in form and details may be made therein without departing from the spirit and scope of the present disclosure as defined by the following claims and equivalents thereof.

Embodiments are set out in the following clauses:
Clause 1. A secondary battery comprising:
   a cathode layer; an anode layer; and a flexible electrolyte layer between the cathode layer and the anode layer,
   wherein the cathode layer comprises a cathode current collector and a cathode active material layer on one or both surfaces of the cathode current collector, and
   the anode layer comprises an anode current collector and a first anode active material layer on one surface of the anode current collector,
   wherein an initial charge capacity of the first anode active material layer is less than 50 % of an initial charge capacity of the cathode active material layer.
Clause 2. The secondary battery of clause 1, wherein the electrolyte layer comprises a polymer electrolyte, a liquid electrolyte, or a combination thereof, wherein the liquid electrolyte has a viscosity of 10 cps or greater at 25 °C and 1 atm.
Clause 3. The secondary battery of clause 1 or clause 2, wherein the polymer electrolyte comprises a polymer comprising repeating units having a thermopolymerizable functional group, a thermally cured product of the polymer, an oligomer comprising repeating units having a thermopolymerizable functional group, a thermally cured product of the oligomer, a monomer having a thermopolymerizable functional group, a thermally cured product of the monomer, an oligomeric ionic liquid, a polymeric ionic liquid, or a combination thereof.
Clause 4. The secondary battery of any one of clauses 1 to 3, wherein the thermopolymerizable functional group comprises a cyano group, a hydroxyl group, an amino group, an amide group, an imide group, a carboxyl group, an acid anhydride group, or a combination thereof.
Clause 5. The secondary battery of any one of clauses 1 to 4, wherein the liquid electroltye comprises an ionic liquid, and has a viscosity of 15 cps or greater at 25 °C and 1 atm.
Clause 6. The secondary battery of any one of clauses 1 to 5, wherein the ionic liquid is represented by Formula 1 or 2: 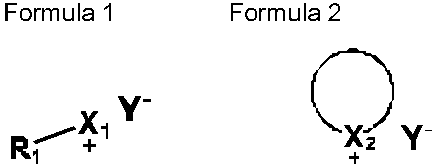 wherein, in Formula 1,
   X₁ is -N(R₂)(R₃)(R₄) or -P(R₂)(R₃)(R₄), and
   R₁, R₂, R₃, and R₄ are each independently an unsubstituted or halogen-substituted C1-C30 alkyl group, an unsubstituted or halogen-substituted C1-C30 alkoxy group, an unsubstituted or halogen-substituted C6-C30 aryl group, an unsubstituted or halogen-substituted C6-C30 aryloxy group, an unsubstituted or halogen-substituted C3-C30 heteroaryl group, an unsubstituted or halogen-substituted C3-C30 heteroaryloxy group, an unsubstituted or halogen-substituted C4-C30 cycloalkyl group, an unsubstituted or halogen-substituted C3-C30 heterocycloalkyl group, or an unsubstituted or halogen-substituted C2-C100 alkyleneoxide group, and
   wherein, in Formula 2, 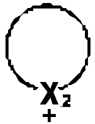 is a heterocycloalkyl ring or heteroaryl ring containing 1 to 3 heteroatoms and 2 to 30 carbon atoms, wherein the ring is unsubstituted or substituted with a substituent,
   X₂ is =N(R₅)(R₆), -N(R₅)=, =P(R₅)(R₆), or -P(R₅)=,
   the substituents R₅ and R₆ for the ring are each independently hydrogen, an unsubstituted or halogen-substituted C1-C30 alkyl group, an unsubstituted or halogen-substituted C1-C30 alkoxy group, or an unsubstituted or halogen-substituted C6-C30 aryl group, an unsubstituted or halogen-substituted C6-C30 aryloxy group, an unsubstituted or halogen-substituted C3-C30 heteroaryl group, an unsubstituted or halogen-substituted C3-C30 heteroaryloxy group, an unsubstituted or halogen-substituted C4-C30 cycloalkyl group, an unsubstituted or halogen-substituted C3-C30 heterocycloalkyl group, or an unsubstituted or halogen-substituted C2-C100 alkyleneoxide group, and
   Y⁻ is an anion.
Clause 7. The secondary battery of any one of clauses 1 to 6, wherein the electrolyte layer is a self-standing film, and further comprises a flexible porous film.
Clause 8. The secondary battery of any one of clauses 1 to 7, wherein the cathode active material layer comprises an alkali metal-containing sulfide-based cathode active material or an alkali metal-containing oxide-based cathode active material, and the alkali metal comprises lithium or sodium.
Clause 9. The secondary battery of any one of clauses 1 to 8, wherein the alkali metal-containing sulfide-based cathode active material comprises a Li₂S-containing composite,
   wherein the Li₂S-containing composite comprises a composite of Li₂S and a carbon-based material, a composite of Li₂S, a carbon-based material, and a solid electrolyte, a composite of Li₂S and a solid electrolyte, a composite of Li₂S, a carbon-based material, and a lithium salt, a composite of Li₂S and a lithium salt, a composite of Li₂S and a metal carbide, a composite of Li₂S, a carbon-based material, and a metal carbide, a composite of Li₂S and a metal nitride, a composite of Li₂S, a carbon-based material, and a metal nitride, or a combination thereof.
Clause 10. The secondary battery of any one of clauses 1 to 9, wherein the lithium salt is a binary compound or a ternary compound,
   wherein the binary compound comprises Lil, LiBr, LiCI, LiF, LiH, Li₂O, Li₂Se, Li₂Te, LisN, LisP, Li₃As, LisSb, Li₃Al₂, LiBs, or a combination thereof, and
   the ternary compound comprises LisOCI, LiPF₆, LiBF₄, LiSbF₆, LiAsF₆, LiClO₄, LiAlO₂, LiAlCl₄, LiNO₃, Li₂CO₃, LiBH₄, Li₂SO₄, Li₃BO₃, Li₃PO₄, Li₄NCl, Li₅NCl₂, Li₃BN₂, or a combination thereof.
Clause 11. The secondary battery of any one of clauses 1 to 10, wherein the carbon-based material comprises a fibrous carbon-based material,
   wherein the fibrous carbon-based material comprises a carbon nanostructure, the carbon nanostructure comprising carbon nanofibers, carbon nanotubes, carbon nanobelts, carbon nanorods, or a combination thereof.
Clause 12. The secondary battery of any one of clauses 1 to 11, wherein the Li₂S-containing composite comprises a composite of Li₂S, a lithium salt, and a carbon-based material, and
   comprises about 10 parts by weight to about 80 parts by weight of Li₂S, about 1 part by weight to about 40 parts by weight of the lithium salt, and about 1 part by weight to about 20 parts by weight of the carbon-based material, with respect to 100 parts by weight of the composite,
   the cathode active material layer further comprises a sulfide-based solid electrolyte, and
   in the cathode active material layer, the carbon-based material is arranged only in the Li₂S-containing composite.
Clause 13. The secondary battery of any one of clauses 1 to 12, wherein the alkali metal-containing oxide-based cathode active material comprises a lithium transition metal oxide represented by one of Formulae 1 to 8:

   Formula 1 LiₐNiₓCO_{y}M_{z}O_{2-b}A_{b}

   wherein, in Formula 1,
   1.0≤a≤1.2, 0≤b≤0.2, 0.8≤x<1, 0≤y≤0.3, 0<z≤0.3, and x+y+z=1,
   M is manganese (Mn), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminum (Al), boron (B), or a combination thereof, and
   A is F, S, Cl, Br, or a combination thereof,

      Formula 2 LiNiₓCo_{y}Mn_{z}O₂

      Formula 3 LiNiₓCo_{y}Al_{z}O₂
   wherein, in Formulae 2 and 3, 0.8≤x≤0.95, 0≤y≤0.2, 0<z≤0.2, and x+y+z=1,

      Formula 4 LiNiₓCo_{y}Mn_{z}Al_{w}O₂
   wherein, in Formula 4, 0.8≤x≤0.95, 0≤y≤0.2, 0<z≤0.2, 0<w≤0.2, and x+y+z+w=1,

      Formula 5 LiₐCOₓM_{y}O_{2-b}A_{b}

      wherein, in Formula 5,
      1.0≤a≤1.2, 0≤b≤0.2, 0.9≤x≤1, 0≤y≤0.1, and x+y=1,
      M is manganese (Mn), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminum (Al), boron (B), or a combination thereof, and
      A is F, S, Cl, Br, or a combination thereof,

         Formula 6 LiₐNiₓMn_{y}M'_{z}O_{2-b}A_{b}

         wherein, in Formula 6,
         1.0≤a≤1.2, 0≤b≤0.2, 0<x≤0.3, 0.5≤y<1, 0<z≤0.3, and x+y+z=1,
         M' is cobalt (Co), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminum (Al), boron (B), or a combination thereof, and
         A is F, S, Cl, Br, or a combination thereof,

            Formula 7 LiₐM1ₓM2_{y}PO_{4-b}X_{b}

            wherein, in Formula 7, 0.90≤a≤1.1, 0≤x≤0.9, 0≤y≤0.5, 0.9<x+y<1.1, and 0≤b≤2, and
            M1 is chromium (Cr), manganese (Mn), iron (Fe), cobalt (Co), nickel (Ni), copper (Cu), zirconium (Zr), or a combination thereof,
            M2 is magnesium (Mg), calcium (Ca), strontium (Sr), barium (Ba), titanium (Ti), zinc (Zn), boron (B), niobium (Nb), gallium (Ga), indium (In), molybdenum (Mo), tungsten (W), aluminum (Al), silicon (Si), chromium (Cr), vanadium (V), scandium (Sc), yttrium (Y), or a combination thereof, and X is O, F, S, P, or a combination thereof, and

               Formula 8 LiₐM3_{z}PO₄

               wherein, in Formula 8, 0.90≤a≤1.1 and 0.9≤z≤1.1, and
               M3 is chromium (Cr), manganese (Mn), iron (Fe), cobalt (Co), nickel (Ni), copper (Cu), zirconium (Zr), or a combination thereof.
Clause 14. The secondary battery of any one of clauses 1 to 13, wherein the first anode active material layer comprises an anode active material and a binder,
   wherein the anode active material has a particle form, and has an average particle diameter of 4 µm or less.
Clause 15. The secondary battery of any one of clauses 1 to 14, wherein the anode active material comprises at least one selected from a carbon-based anode active material and a metal or metalloid anode active material,
   wherein the carbon-based anode active material comprises amorphous carbon, crystalline carbon, porous carbon, or a combination thereof, and
   the metal or the metalloid anode active material comprises gold (Au), platinum (Pt), palladium (Pd), silicon (Si), silver (Ag), aluminum (Al), bismuth (Bi), tin (Sn), zinc (Zn), or a combination thereof.
Clause 16. The secondary battery of any one of clauses 1 to 15, wherein the anode active material comprises primary particles consisting of amorphous carbon and secondary particles consisting of a metal or a metalloid,
   wherein an amount of the secondary particles is in a range of about 1 wt% to about 60 wt% with respect to a total weight of the mixture.
Clause 17. The secondary battery of any one of clauses 1 to 16, wherein the initial charge capacity of the first anode active material layer is 50 % or less of the initial charge capacity of the cathode active material layer.
Clause 18. The secondary battery of any one of clauses 1 to 17, further comprising a second anode active material layer between the anode current collector and the first anode active material layer and/or between the anode current collector and the electrolyte layer,
   wherein the second anode active material layer is a metal layer, the metal layer comprising lithium or a lithium alloy.
Clause 19. The secondary battery of any one of clauses 1 to 18, wherein at least one of the cathode current collector and the anode current collector comprises a base film and a metal layer on one or both surfaces of the base film,
   wherein the base film comprises a polymer, the polymer comprising polyethylene terephthalate (PET), polyethylene (PE), polypropylene (PP), polybutylene terephthalate (PBT), polyimide (PI), or a combination thereof, and
   the metal layer comprises indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof.
Clause 20. The secondary battery of any one of clauses 1 to 19, further comprising a first inactive member on another surface of the anode current collector, wherein the first inactive member comprises a conductive flame-retardant inactive member.

## Claims

1. A secondary battery (1) comprising:
a cathode layer (10);
an anode layer (20); and
a flexible electrolyte layer (30) between the cathode layer (10) and the anode layer (20),
wherein the cathode layer (10) comprises a cathode current collector (11) and a cathode active material layer (12) on at least one surface of the cathode current collector (11), and
the anode layer (20) comprises an anode current collector (21) and a first anode active material layer (22) on a surface of the anode current collector (21),
wherein an initial charge capacity of the first anode active material layer (22) is less than 50 % of an initial charge capacity of the cathode active material layer (12).

2. The secondary battery (1) as claimed in claim 1, wherein the electrolyte layer comprises a polymer electrolyte, a liquid electrolyte, or a combination thereof, and wherein the liquid electrolyte has a viscosity of 10 cps or greater at 25 °C and 1 atm.

3. The secondary battery (1) as claimed in claim 1 or 2, wherein the electrolyte layer comprises a polymer electrolyte that comprises a polymer comprising repeating units having a thermopolymerizable functional group, a thermally cured product of the polymer, an oligomer comprising repeating units having a thermopolymerizable functional group, a thermally cured product of the oligomer, a monomer having a thermopolymerizable functional group, a thermally cured product of the monomer, an oligomeric ionic liquid, a polymeric ionic liquid, or a combination thereof.

4. The secondary battery (1) as claimed in claims 1 to 3, wherein the thermopolymerizable functional group comprises a cyano group, a hydroxyl group, an amino group, an amide group, an imide group, a carboxyl group, an acid anhydride group, or a combination thereof.

5. The secondary battery (1) as claimed in claims 1 to 4, wherein the liquid electrolyte comprises an ionic liquid, and has a viscosity of 15 cps or greater at 25 °C and 1 atm, preferably wherein the ionic liquid is represented by Formula 1 or 2: 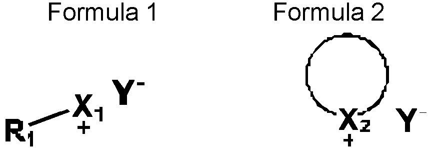 wherein, in Formula 1,
X₁ is -N(R₂)(R₃)(R₄) or -P(R₂)(R₃)(R₄), and
R₁, R₂, R₃, and R₄ are each independently an unsubstituted or halogen-substituted C1-C30 alkyl group, an unsubstituted or halogen-substituted C1-C30 alkoxy group, an unsubstituted or halogen-substituted C6-C30 aryl group, an unsubstituted or halogen-substituted C6-C30 aryloxy group, an unsubstituted or halogen-substituted C3-C30 heteroaryl group, an unsubstituted or halogen-substituted C3-C30 heteroaryloxy group, an unsubstituted or halogen-substituted C4-C30 cycloalkyl group, an unsubstituted or halogen-substituted C3-C30 heterocycloalkyl group, or an unsubstituted or halogen-substituted C2-C100 alkyleneoxide group, and
wherein, in Formula 2, 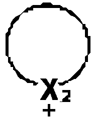 is a heterocycloalkyl ring or heteroaryl ring containing 1 to 3 heteroatoms and 2 to 30 carbon atoms, wherein the ring is unsubstituted or substituted with a substituent,
X₂ is =N(R₅)(R₆), -N(R₅)=, =P(R₅)(R₆), or -P(R₅)=,
the substituents R₅ and R₆ for the ring are each independently hydrogen, an unsubstituted or halogen-substituted C1-C30 alkyl group, an unsubstituted or halogen-substituted C1-C30 alkoxy group, or an unsubstituted or halogen-substituted C6-C30 aryl group, an unsubstituted or halogen-substituted C6-C30 aryloxy group, an unsubstituted or halogen-substituted C3-C30 heteroaryl group, an unsubstituted or halogen-substituted C3-C30 heteroaryloxy group, an unsubstituted or halogen-substituted C4-C30 cycloalkyl group, an unsubstituted or halogen-substituted C3-C30 heterocycloalkyl group, or an unsubstituted or halogen-substituted C2-C100 alkyleneoxide group, and
Y⁻ is an anion.

6. The secondary battery (1) as claimed in claims 1 to 5, wherein the electrolyte layer is a self-standing film, and further comprises a flexible porous film.

7. The secondary battery (1) as claimed in claims 1 to 6, wherein the cathode active material layer comprises an alkali metal-containing sulfide-based cathode active material or an alkali metal-containing oxide-based cathode active material, and the alkali metal comprises lithium or sodium, preferably
wherein the alkali metal-containing sulfide-based cathode active material comprises a Li₂S-containing composite, and
wherein the Li₂S-containing composite comprises a composite of Li₂S and a carbon-based material, a composite of Li₂S, a carbon-based material, and a solid electrolyte, a composite of Li₂S and a solid electrolyte, a composite of Li₂S, a carbon-based material, and a lithium salt, a composite of Li₂S and a lithium salt, a composite of Li₂S and a metal carbide, a composite of Li₂S, a carbon-based material, and a metal carbide, a composite of Li₂S and a metal nitride, a composite of Li₂S, a carbon-based material, and a metal nitride, or a combination thereof; and/or
wherein the lithium salt is a binary compound or a ternary compound,
wherein the binary compound comprises Lil, LiBr, LiCI, LiF, LiH, Li₂O, Li₂Se, Li₂Te, LisN, LisP, Li₃As, Li₃Sb, Li₃Al₂, LiB₃, or a combination thereof, and
the ternary compound comprises Li₃OCl, LiPF₆, LiBF₄, LiSbF₆, LiAsF₆, LiClO₄, LiAlO₂, LiAlCl₄, LiNO₃, Li₂CO₃, LiBH₄, Li₂SO₄, Li₃BO₃, Li₃PO₄, Li₄NCl, Li₅NCl₂, Li₃BN₂, or a combination thereof.

8. The secondary battery (1) as claimed in claims 1 to 7, wherein the carbon-based material comprises a fibrous carbon-based material, and
wherein the fibrous carbon-based material comprises a carbon nanostructure, the carbon nanostructure comprising carbon nanofibers, carbon nanotubes, carbon nanobelts, carbon nanorods, or a combination thereof.

9. The secondary battery (1) as claimed in claims 1 to 8, wherein the Li₂S-containing composite comprises a composite of Li₂S, a lithium salt, and a carbon-based material, and
wherein the composite of the Li₂S-containing composite comprises about 10 parts by weight to about 80 parts by weight of Li₂S, about 1 part by weight to about 40 parts by weight of the lithium salt, and about 1 part by weight to about 20 parts by weight of the carbon-based material, with respect to 100 parts by weight of the composite,
the cathode active material layer further comprises a sulfide-based solid electrolyte, and
in the cathode active material layer, the carbon-based material is arranged only in the Li₂S-containing composite.

10. The secondary battery (1) as claimed in claims 1 to 9, wherein the alkali metal-containing oxide-based cathode active material comprises a lithium transition metal oxide represented by one selected from among Formulae 11 to 18:
Formula 11 LiₐNiₓCo_{y}M_{z}O_{2-b}A_{b}
wherein, in Formula 11, 1.0≤a≤1.2, 0≤b≤0.2, 0.8≤x<1, 0≤y≤0.3, 0<z≤0.3, and x+y+z=1,
M is manganese (Mn), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminum (Al), boron (B), or a combination thereof, and
A is F, S, Cl, Br, or a combination thereof,
Formula 12 LiNiₓCo_{y}Mn_{z}O₂
Formula 13 LiNiₓCo_{y}Al_{z}O₂
wherein, in Formulae 12 and 13, 0.8≤x≤0.95, 0≤y≤0.2, 0<z≤0.2, and x+y+z=1,
Formula 14 LiNiₓCo_{y}Mn_{z}Al_{w}O₂
wherein, in Formula 14, 0.8≤x≤0.95, 0≤y≤0.2, 0<z≤0.2, 0<w≤0.2, and x+y+z+w=1,
Formula 15 LiₐCoₓM_{y}O_{2-b}A_{b}
wherein, in Formula 15, 1.0≤a≤1.2, 0≤b≤0.2, 0.9≤x≤1, 0≤y≤0.1, and x+y=1,
M is manganese (Mn), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminum (Al), boron (B), or a combination thereof, and
A is F, S, Cl, Br, or a combination thereof,
Formula 16 LiₐNiₓMn_{y}M'_{z}O_{2-b}A_{b}
wherein, in Formula 16,1.0≤a≤1.2, 0≤b≤0.2, 0<x≤0.3, 0.5≤y<1, 0<z≤0.3, and x+y+z=1,
M' is cobalt (Co), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminum (Al), boron (B), or a combination thereof, and
A is F, S, Cl, Br, or a combination thereof,
Formula 17 LiₐM1ₓM2_{y}PO_{4-b}X_{b}
wherein, in Formula 17, 0.90≤a≤1.1, 0≤x≤0.9, 0≤y≤0.5, 0.9<x+y<1.1, and 0≤b≤2, and
M1 is chromium (Cr), manganese (Mn), iron (Fe), cobalt (Co), nickel (Ni), copper (Cu), zirconium (Zr), or a combination thereof,
M2 is magnesium (Mg), calcium (Ca), strontium (Sr), barium (Ba), titanium (Ti), zinc (Zn), boron (B), niobium (Nb), gallium (Ga), indium (In), molybdenum (Mo), tungsten (W), aluminum (Al), silicon (Si), chromium (Cr), vanadium (V), scandium (Sc), yttrium (Y), or a combination thereof, and X is O, F, S, P, or a combination thereof, and
Formula 18 LiₐM3_{z}PO₄
wherein, in Formula 18, 0.90≤a≤1.1 and 0.9≤z≤1.1, and
M3 is chromium (Cr), manganese (Mn), iron (Fe), cobalt (Co), nickel (Ni), copper (Cu), zirconium (Zr), or a combination thereof.

11. The secondary battery (1) as claimed in claims 1 to 10, wherein the first anode active material layer (22) comprises an anode active material and a binder,
wherein the anode active material is in a form of particles, and has an average particle diameter of 4 µm or less; and/or
wherein the anode active material comprises at least one selected from among a carbon-based anode active material and a metal and/or metalloid anode active material,
wherein the carbon-based anode active material comprises amorphous carbon, crystalline carbon, porous carbon, or a combination thereof, and
the metal or the metalloid anode active material comprises gold (Au), platinum (Pt), palladium (Pd), silicon (Si), silver (Ag), aluminum (Al), bismuth (Bi), tin (Sn), zinc (Zn), or a combination thereof; and/or
wherein the anode active material comprises primary particles comprising amorphous carbon and secondary particles comprising a metal and/or a metalloid,
wherein an amount of the secondary particles is in a range of about 1 wt% to about 60 wt% with respect to a total weight of the mixture.

12. The secondary battery (1) as claimed in claims 1 to 11, wherein the initial charge capacity of the first anode active material layer (22) is 50 % or less of the initial charge capacity of the cathode active material layer.

13. The secondary battery (1) as claimed in claims 1 to 12, further comprising a second anode active material layer (24), the second anode active material layer (24) being:
between the anode current collector (21) and the first anode active material layer (22); and/or
between the anode current collector (21) and the electrolyte layer,
wherein the second anode active material layer (24) is a metal layer, the metal layer comprising lithium or a lithium alloy.

14. The secondary battery (1) as claimed in claims 1 to 13, wherein at least one selected from among the cathode current collector (11) and the anode current collector (21) comprises a base film and a metal layer on at least one surface of the base film,
wherein the base film comprises a polymer, the polymer comprising polyethylene terephthalate (PET), polyethylene (PE), polypropylene (PP), polybutylene terephthalate (PBT), polyimide (PI), or a combination thereof, and
the metal layer comprises indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof.

15. The secondary battery (1) as claimed in claims 1 to 14, further comprising a first inactive member (50) on another surface of the anode current collector (21), wherein the first inactive member (50) comprises a conductive flame-retardant inactive member.
